# EUROPÄISCHE PATENTSCHRIFT

(11) **EP 2 825 436 B1**
(45) Veröffentlichungstag und Bekanntmachung des Hinweises auf die Patenterteilung: **18.05.2016**
(21) Anmeldenummer: 13713096.9
(22) Anmeldetag: 12.03.2013
(51) Int. Cl.: B61D 3/18, B61D 47/00, B65G 63/02

(54) **GÜTERWAGGON MIT AUSKLAPPBAREN WAGGONSEITENWÄNDEN**
FREIGHT CAR HAVING CAR SIDE WALLS THAT CAN BE FOLDED OUT
WAGON DE MARCHANDISES COMPRENANT DES PAROIS LATÉRALES POUVANT ÊTRE ABAISSÉES

(30) Priorität: 12.03.2012 DE 102012004945
(43) Veröffentlichungstag der Anmeldung: 21.01.2015
(73) Patentinhaber: Cargobeamer AG, 04319 Leipzig (DE)
(72) Erfinder: WEIDEMANN, Hans-Jürgen, 67346 Speyer (DE); RUDAT, Bernd, 08523 Plauen (DE); TRÖGER, Lars, 08523 Plauen (DE)
(74) Vertreter: Solf, Alexander
(86) Internationale Anmeldenummer: PCT/EP2013/054927
(87) Internationale Veröffentlichungsnummer: WO 2013/135649

(56) Entgegenhaltungen:
- WO-A1-2007/104721
- DE-B- 1 242 667

## Beschreibung

Die vorliegende Erfindung betrifft eine kombinierte Anordnung eines zwei ein-und ausklappbare Waggonseitenwände und Verriegelungseinrichtungen zum Verriegeln der Waggonseitenwände in deren eingeklappter Stellung aufweisenden Güterwaggons mit Schwenk- und Entriegelungsvorrichtungen zum Entriegeln sowie Ein- und Ausklappen der Waggonseitenwände sowie eine Güterumschlagvorrichtung mit einer derartigen Anordnung.

Aus der WO 2007/104721 A1 sind eine Güterumschlagvorrichtung zum Be- und Entladen von Güterzügen und ein dafür geeigneter Güterwaggon mit abklappbaren Waggonseitenwänden bekannt. Die Güterumschlagvorrichtung dient zum Umschlagen von Gütern von der Straße zur Schiene und umgekehrt, wobei das Umschlagen mittels schienengleicher Querverladung erfolgt. Dazu weist die Güterumschlagvorrichtung eine Gleisanlage mit zwei zueinander parallelen Gleissträngen auf, auf denen die Güterzüge mit den Güterwaggons fahren. Neben den Gleissträngen ist eine in etwa schienengleiche Verladebahn vorgesehen. Auf den Güterwaggons sind abnehmbare Wechseltragelemente bzw. Waggonaufsätze angeordnet, auf denen die zu transportierenden Güter lagern. Beim Entladen werden die Waggonaufsätze mitsamt der darauf angeordneten Güter von den Güterwaggons abgehoben und mittels als Quertransporteinrichtungen dienenden Shuttlebalken zur Verladebahn gefahren und auf dieser abgesenkt. Das Beladen erfolgt in umgekehrter Reihenfolge. Die Shuttlebalken verfahren dazu auf in unterflur in Querrillen der Verladebahn angeordneten Tragschienen sowie auf fluchtend dazu angeordneten Überbrückungstragschienenstücken und Tragschienenstücken, die zwischen den beiden Gleissträngen angeordnet sind. Zwischen den Überbrückungstragschienenstücken und den Tragschienen ist jeweils eine Lücke vorhanden. Damit der Waggonaufsatz quer zu den Gleissträngen von dem jeweiligen Waggonaufsatz weg gefahren werden kann, werden die Waggonseitenwände nach dem Anheben der Waggonaufsätze weggeklappt, so dass sie sich in der Lücke befinden und von den Shuttlebalken überfahren werden können.

Die Güterwaggons der WO 2007/104721 A1 weisen jeweils zwei Drehgestelle, zwei auf den Drehgestellen gelagerte Waggonkopfstücke sowie die beiden Waggonseitenwände auf. Die Waggonseitenwände verbinden die beiden Waggonkopfstücke miteinander und sind mit den Waggonkopfstücken starr verriegelbar. Insbesondere weisen die Waggonkopfstücke dazu vertikal abstehende Fixierzapfen auf, in die an den Waggonseitenwänden vorhandene Fixierösen eingreifen. Die Verspannung der Fixierzapfen mit den Fixierösen erfolgt z.B. mittels Exzentereinrichtungen an den Fixierzapfen. Zum Abklappen nach außen werden die Waggonseitenwände nach dem Lösen der Verspannung zunächst kurz angehoben, so dass die Fixierösen über die Fixierzapfen greifen und anschließend nach unten in die Lücken weggeklappt. Als Schwenkantriebsmittel weisen die Waggonseitenwände jeweils zwei Hebelarme auf, die einendig mit der jeweiligen Waggonseitenwand starr verbunden sind und andernendig mit einem Schwenklager schwenkbar in einem Kulissenblock angeordnet sind. Die Kulissenblöcke sind in einer vertikalen Kulissenbahn geführt und mit gleisbettgebundenen oder kopfstückgebundenen Antriebsmitteln antreibbar. Etwa in der Mitte der Hebelarme ist jeweils eine Schubstange angelenkt, deren anderes Ende ebenfalls an einem Kulissenblock angelenkt ist. Dieser Kulissenblock ist allerdings in einer horizontalen Kulissenbahn geführt und steht ebenfalls mit gleisbettgebundenen oder kopfstückgebundenen Antriebsmitteln antreibbar in Verbindung. Eine Verschiebung der beiden Kulissenblöcke bewirkt das oben beschriebene Anheben/Absenken und Abklappen/Anklappen der Waggonseitenwände.

Diese Güterumschlagvorrichtung hat sich bewährt.

Die DE 1 242 667 offenbart ein Schienenfahrzeug zum Transport von Sattelaufliegern. Das Schienenfahrzeug weist abklappbare Seitenwände auf, welche um eine zur Waggonlängsrichtung parallele Schwenkachse nach außen abklappbar sind und mit jedem der beiden gekröpftes Enden des Fahrzeugrahmens mittels einer Festlegevorrichtung verriegelbar sind. Dies erfolgt dadurch, dass Querzapfen, die an den nach oben gekröpften Enden des Fahrzeugrahmens befestigt sind, in Bohrungen der Seitenwände eingreifen. Um die Seitenwände im hochgeklappten Zustand auf die Querzapfen aufzuschieben und somit mit den Enden des Fahrzeugrahmens fest verbinden zu können, ist ein zur Seite wegklappbarer Spannbolzen mit Handradmutter vorhanden. Der Spannbolzen greift in Schlitze an den Seitenwänden ein. Die Betätigung der Seitenwände erfolgt gemäß der DE 12 42 667 durch bekannte Betätigungsvorrichtungen hydraulischer, mechanischer oder ähnlicher Art.

Aufgabe der vorliegenden Erfindung ist die Bereitstellung einer kombinierten Anordnung bzw. Vorrichtung aus einem Güterwaggon für die schienengleiche Querverladung von Gütern, wobei der Güterwaggon ein Waggonuntergestell, das zwei ein- und ausklappbare Waggonseitenwände aufweist, die mit dem Waggonuntergestell in ihrer eingeklappten Stellung verriegelbar sind, aufweist, und Schwenk-und Entriegelungsvorrichtungen zur Entriegelung und zum Ein-und Ausklappen der Waggonseitenwände.

Weitere Aufgabe ist die Bereitstellung einer Güterumschlagvorrichtung zum Be- und Entladen von Güterzügen mit zumindest einer derartigen kombinierten Anordnung.

Diese Aufgaben werden durch die Merkmale der Ansprüche 1 und 19 gelöst. Vorteilhafte Weiterbildungen der Erfindung sind in den sich jeweils anschließenden Unteransprüchen gekennzeichnet.

Im Folgenden wird die Erfindung anhand einer Zeichnung beispielhaft näher erläutert. Es zeigen:
- Figur 1:: Eine perspektivische, schematische Ansicht eines Abschnitts der erfindungsgemäßen Güterumschlagvorrichtung mit einem Güterwaggon ohne Waggonaufsatz
- Figur 2:: Eine perspektivische Ansicht einer erfindungsgemäßen Anordnung mit einem Güterwaggon ohne Waggonaufsatz mit zurück gefahrener Schwenk- und Entriegelungseinrichtung
- Figur 3:: Die Anordnung gemäß Fig. 2 mit heran gefahrener Schwenk- und Entriegelungseinrichtung
- Figur 4:: Die Anordnung gemäß Fig. 3 mit abgeklappten Waggonseitenwänden
- Figur 5:: Eine perspektivische Explosionsdarstellung einer erfindungsgemäßen Schwenk- und Entriegelungsvorrichtung
- Figur 6:: Eine perspektivische Darstellung der ausgefahrenen Schwenk- und Entriegelungsvorrichtung
- Figur 7:: Eine perspektivische Darstellung der eingefahrenen Schwenk- und Entriegelungsvorrichtung
- Figur 8:: Eine schwenkhebelseitige Ansicht der eingefahrenen Schwenk- und Entriegelungsvorrichtung mit einem Teil des Hebelmechanismus des Güterwaggons
- Figur 9:: Eine perspektivische Ansicht der eingefahrenen Schwenk- und Entriegelungsvorrichtung gemäß Figur 8
- Figur 10:: Eine schwenkhebelseitige Ansicht der ausgefahrenen Schwenk- und Entriegelungsvorrichtung gemäß Figur 8
- Figur 11:: Eine perspektivische Ansicht der ausgefahrenen Schwenk- und Entriegelungsvorrichtung gemäß Figur 8
- Figur 12:: Eine schwenkhebelseitige Ansicht der eingefahrenen Schwenk- und Entriegelungsvorrichtung gemäß Figur 8 mit dem vollständigen Hebelmechanismus des Güterwaggons
- Figur 13:: Eine schwenkhebelseitige Ansicht der Schwenk- und Entriegelungsvorrichtung gemäß Figur 12
- Figur 14:: Einen Schnitt entlang der Linie A-A in Fig.12
- Figur 15:: Eine perspektivische Draufsicht auf einen Ausschnitt eines Waggonkopfstückes mit eingehängtem Waggonaufsatz und einer zweiten Verriegelungseinrichtung
- Figur 16:: Eine perspektivische Draufsicht auf einen Ausschnitt eines Waggonkopfstückes mit abgeklappter Waggonseitenwand

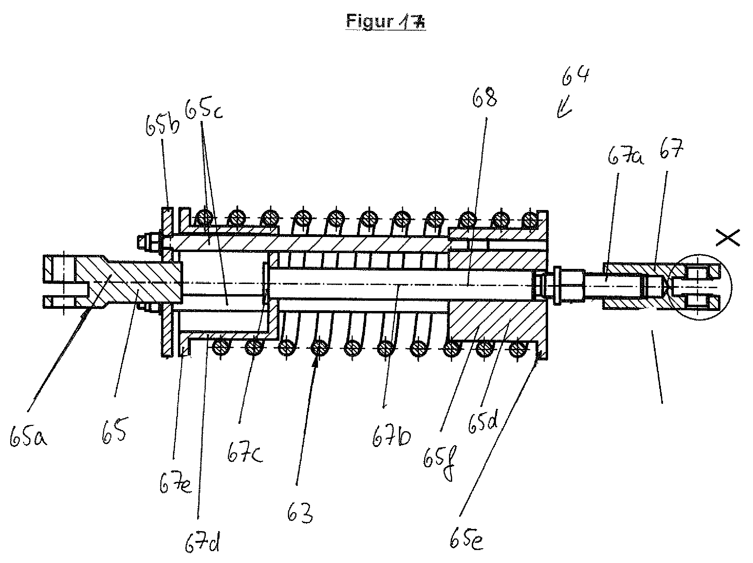

- Figur 17:: Einen Längsschnitt durch eine Feder einer ersten Verriegelungseinrichtung
- Figur 18:: Eine vergrößerte perspektivische Draufsicht auf einen Teil der zweiten Verriegelungseinrichtung

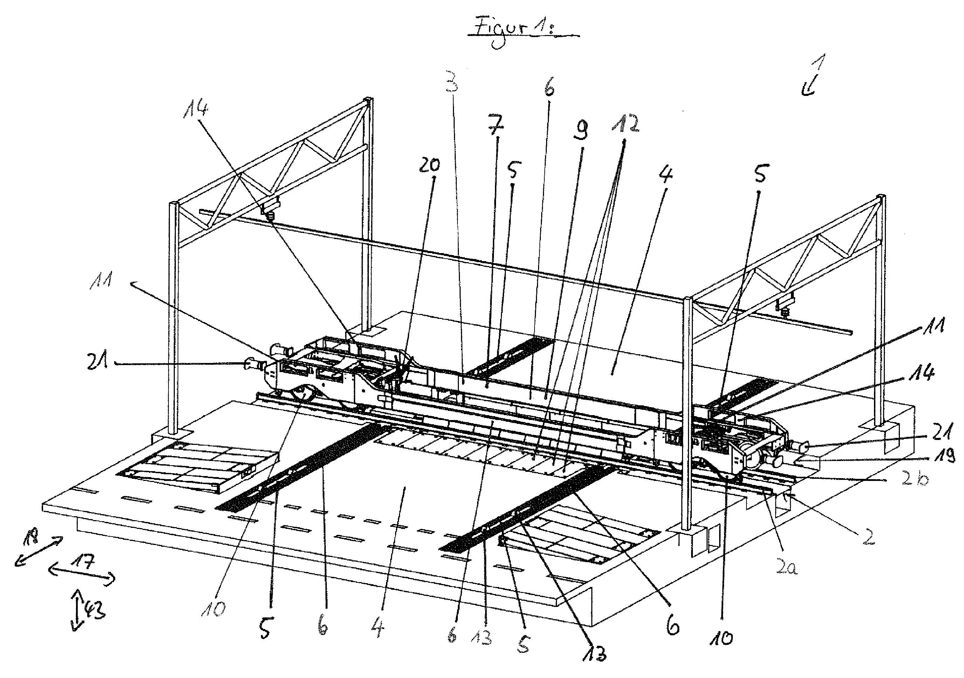

Die erfindungsgemäße Güterumschlagvorrichtung 1 (Fig. 1) dient zum Be- und Entladen von Güterzügen, also zum Umschlagen von Gütern von der Straße zur Schiene und umgekehrt, wobei das Umschlagen mittels schienengleicher Querverladung erfolgt. Dazu weist die Güterumschlagvorrichtung 1 zumindest eine Eisenbahnschiene bzw. Gleisanlage 2 mit zwei zueinander parallelen Schienensträngen bzw. Gleissträngen 2a;2b auf, auf denen die Güterzüge mit Lok (nicht dargestellt) und daran hängenden Schienenwaggons bzw. Güterwaggons 3 verfahrbar gelagert sind. Insbesondere beidseits neben und außerhalb der Gleisanlage 2 ist jeweils eine in etwa schienengleiche Verladebahn 4 vorgesehen. Schienengleich meint, dass die Bahnoberfläche der Verladebahn 4 der Höhe der Schienenoberkanten entspricht oder lediglich geringfügig höher ist.

Die Güterumschlagvorrichtung 1 weist außerdem zumindest ein Quertransportmittel, insbesondere einen Shuttlebalken 5, auf, der quer, also senkrecht, zu den Gleissträngen 2a;2b unterflur in Querrillen 6 der Verladebahn 4 verfahrbar ist. Dazu sind in den Querrillen 6 Förderbahnen (nicht dargestellt) vorhanden, auf denen die Shuttlebalken 5 quer zu den Gleissträngen 2a;2b verfahrbar sind, z.B. gleit- oder rollengelagert sind. Bei den Förderbahnen kann es sich in an sich bekannter Weise um Tragschienen (gemäß WO 2007/104721 A1) handeln, auf denen auf denen die Shuttlebalken 5 quer zu den Gleissträngen 2a;2b verfahrbar sind, z.B. gleit- oder mit ihren Transportrollen rollengelagert sind. Alternativ dazu weisen die Förderbahnen selber ortsfeste Transportrollen auf, auf denen die Shuttlebalken rollengelagert sind (gemäß DE 10 2009 012 159 A1). Bevorzugt sind für jeden Güterwaggon 3 jeweils zwei Shuttlebalken 5 und vier Förderbahnen, nämlich je zwei auf jeder Seite der Gleisanlage 2, vorhanden. Die Förderbahnen enden jeweils vor den Gleissträngen 2a;2b. Zwischen den beiden Gleissträngen 2a;2b sind aber Förderbahnenstücke (nicht dargestellt) vorhanden, die in Fortsetzung der Förderbahnen angeordnet sind, so dass die Shuttlebalken 5 von den Förderbahnen auf die Förderbahnenstücke verfahren können und umgekehrt und die Shuttlebalken 5 somit unter einen Güterwaggon 3 fahren können, worauf weiter unten näher eingegangen wird. Zwischen den Gleissträngen 2a;2b und den Förderbahnen ist eine Lücke vorhanden, in die abgeklappte Waggonseitenwände 6 eines Waggonuntergestells 7 der Güterwaggons 3 zu liegen kommen, worauf ebenfalls weiter unten näher eingegangen wird.

Des Weiteren weist die Güterumschlagvorrichtung 1 mehrere Hubeinrichtungen 12 zum Anheben eines Waggonaufsatzes 8 von dem Waggonuntergestell 7 bzw. von den Shuttlebalken 5 und Absetzen auf dem Waggonuntergestell 7 bzw. auf den Shuttlebalken 5 auf. Die Hubeinrichtungen 12 sind vorzugsweise jeweils beidseits, jeweils verladebahnseitig, direkt neben Gleissträngen 2a;2b angeordnet. Die Hubeinrichtungen 12 sind nicht zwischen den beiden Gleissträngen 2a;2b, sondern außerhalb dieser angeordnet. Auch die langgestreckt ausgebildeten Shuttlebalken 5 weisen oberseitig Hubeinrichtungen 13 auf, die zum Anheben eines Waggonaufsatzes 8 von der Verladebahn 4 und Absetzen auf der Verladebahn 4 dienen.

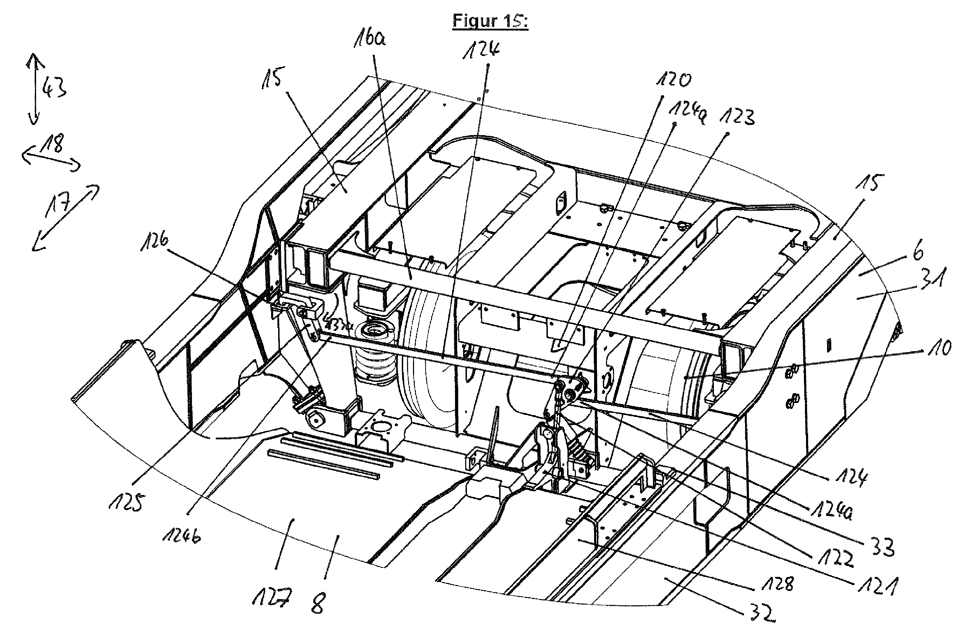

Ein Güterwaggon 3 (Fig. 1-4,15,16) der erfindungsgemäßen Anordnung weist jeweils das Waggonuntergestell 7 und den darauf aufgesetzten, insbesondere eingehängten Waggonaufsatz 8 (Fig. 15) auf, der das jeweilige Transportgut, z.B. Sattelauflieger, Behälter etc. aufnimmt. Das Waggonuntergestell 7 weist einen Waggonrahmen 9 sowie zwei an sich bekannte, insbesondere zweiachsige, voneinander beabstandete Drehgestelle 10 zum Verfahren des Güterwaggons 3 auf der Gleisanlage 2 auf. Der Waggonrahmen 9 weist zwei voneinander beabstandete Vorbauten bzw. Waggonkopfstücke 11 auf, die jeweils stirnseitig bzw. endseitig, also an den beiden Untergestellstirnenden 7a;7b des Waggonuntergestells 7 angeordnet sind. Der Waggonrahmen 9 weist zudem die beiden Waggonseitenwände 6 auf, über die die beiden Waggonkopfstücke 11 miteinander starr, also zueinander unverschieblich und unverdrehbar, verbunden sind.

Die beiden Waggonkopfstücke 11 lagern jeweils in an sich bekannter Weise auf einem der beiden Drehgestelle 10. Dabei sind die beiden Waggonkopfstücke 11 jeweils fest mit dem jeweiligen Drehgestell 10 verbunden. Des Weiteren weisen die beiden Waggonkopfstücke 11 jeweils ein Rahmengestell 14 mit mehreren miteinander fest verbundenen, insbesondere verschweißten, Rahmenstreben bzw. Trägern 15;16a;16b auf. Insbesondere weist das Rahmengestell 14 zwei voneinander beabstandete, äußere Längsstreben bzw. Längsträger 15 auf, die sich in eine horizontale Waggonlängsrichtung 17 erstrecken, auf. Die Waggonlängsrichtung 17 ist parallel zur Längserstreckung der beiden Gleisstränge 2a;2b. Zudem sind mehrere Querstreben bzw. Querträger 16a;16b vorhanden, die sich senkrecht zu den Längsträgern 15 in eine horizontale Waggonquerrichtung 18 erstrecken und diese miteinander verbinden. Insbesondere sind zwei äußere Querträger 16a und mehrere dazwischen angeordnete mittlere Querträger 16b vorhanden. Die Längs- und Querträger 15;16a;16b bilden das im wesentlichen quaderförmige Rahmengestell 14. Die beiden Waggonkopfstücke 11 eines Güterwaggons weisen in Waggonlängsrichtung 17 gesehen zudem jeweils ein erstes, dem jeweils anderen Waggonkopfstück 11 abgewandtes, äußeres Kopfstückende 19 und ein zweites, dem jeweils anderen Waggonkopfstück 11 zugewandtes, inneres Kopfstückende 20 auf.

Vorzugsweise befindet sich zudem oberseitig und zentral auf zumindest einem der beiden Waggonkopfstücke 11 eine Königszapfenaufnahmeeinrichtung (nicht dargestellt) zur Aufnahme und Verriegelung eines Königszapfens eines Sattelaufliegers. Zudem weisen die jeweils an dem äußeren Kopfstückende 19 angeordneten, äußeren Querträger 16a außenseitig jeweils zwei an sich bekannte Puffer 21 auf. Die Puffer 21 sind also jeweils an den beiden Untergestellstirnenden 7a;7b angeordnet.

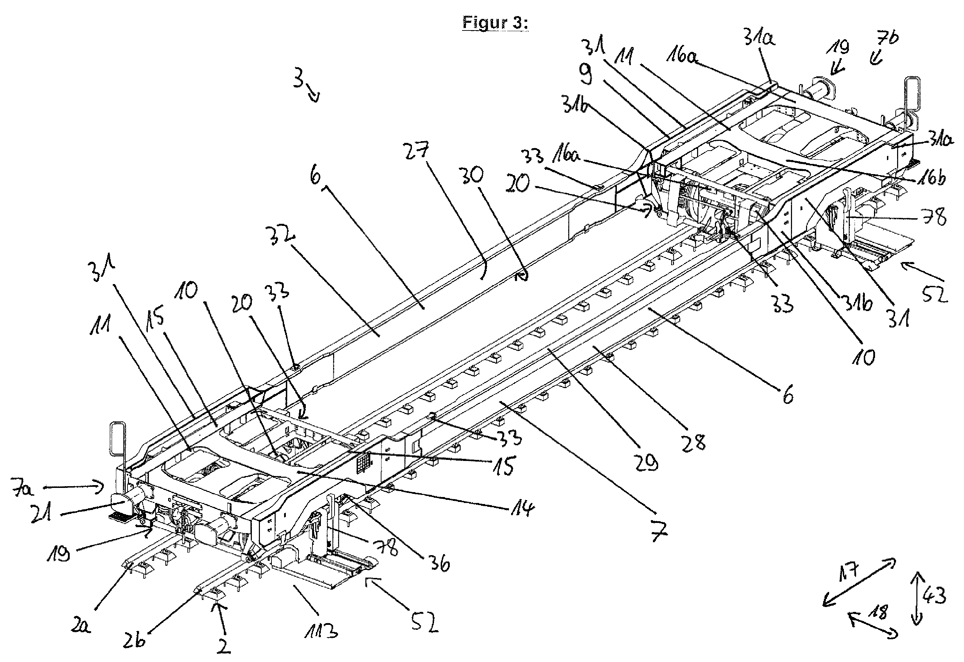

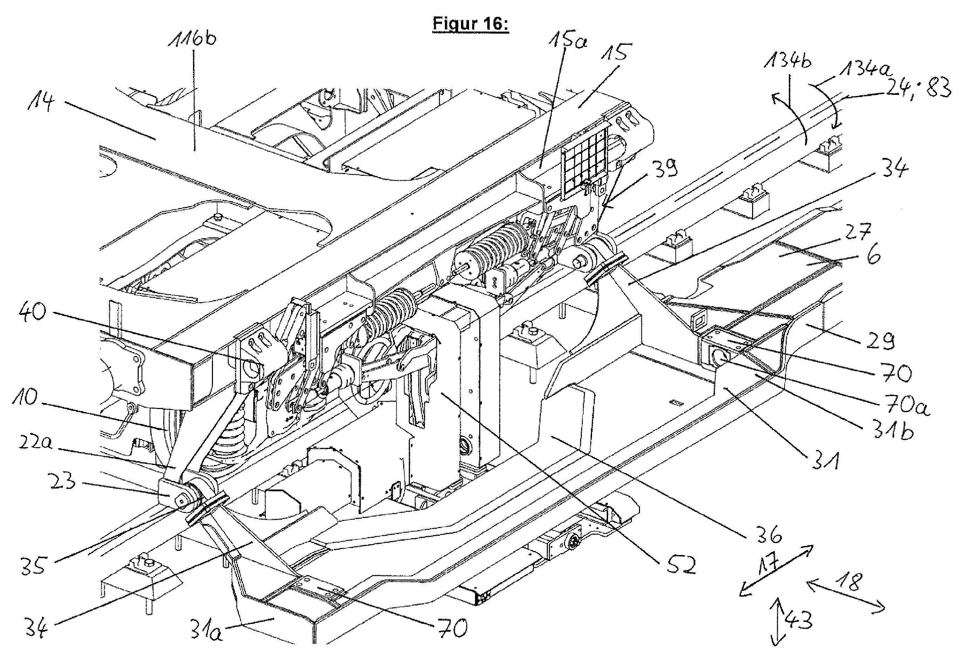

Die beiden Waggonkopfstücke 11 weisen zudem jeweils, insbesondere vier, Lagerarme 22 zur drehbaren bzw. schwenkbaren Lagerung der Waggonseitenwände 6 auf (Fig. 3,16). Die Lagerarme 22 sind dabei jeweils einendig fest, also unverschieblich und unverdrehbar, mit einem der Längsträger 15 verbunden, insbesondere verschweißt. Es sind vorzugsweise pro Längsträger 15 jeweils zwei mit diesem verbundene Lagerarme 22 vorhanden. Einer dieser beiden Lagerarme 22 ist jeweils an dem äußeren Kopfstückende 19 und der andere Lagerarm 22 ist an dem inneren Kopfstückende 20 angeordnet. Die Lagerarme 22 erstrecken sich jeweils von den Längsträgern 15 weg schräg nach unten und nach innen. Dabei erstrecken sich die beiden Lagerarme 22 eines Längsträgers 15 zueinander parallel. Andernendig, also an ihren freien Enden, weisen die Lagerarme 22 jeweils ein Schwenklager 23 zur drehbaren Lagerung der Waggonseitenwände 6 um eine Seitenwandschwenkachse 24 auf. Die Seitenwandschwenkachsen 24 sind parallel zur Waggonlängsrichtung 17. Infolgedessen sind die Seitenwandschwenkachsen 24 der beiden Waggonseitenwände 3 eines Güterwaggons 3 zueinander parallel.

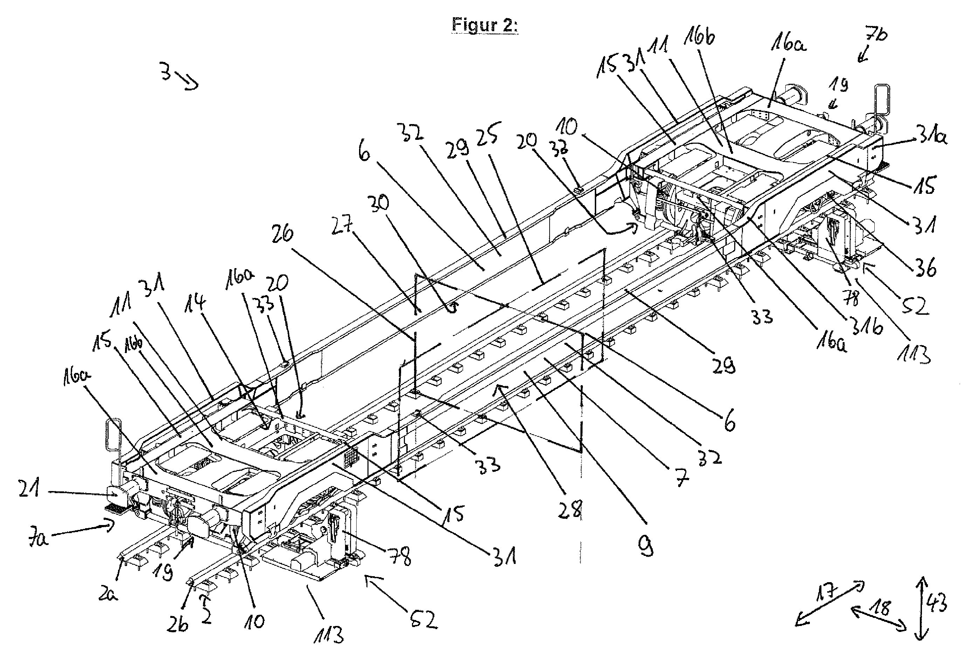

Die Güterwaggons 3 und somit auch die Waggonkopfstücke 11 sind vorzugsweise symmetrisch zu einer vertikalen, mittigen Längsebene 25 (Fig. 2) ausgebildet. Die Längsebene 25 ist senkrecht zur Waggonquerrichtung 18 und somit parallel zur Waggonlängsrichtung 17 und mittig zwischen den beiden Waggonseitenwänden 6 angeordnet. Des Weiteren sind die Güterwaggons 3 vorzugsweise auch symmetrisch zu einer vertikalen, mittigen Querebene 26 (Fig. 2) ausgebildet. Die Querebene 26 ist senkrecht zur Waggonlängsrichtung 17 und somit parallel zur Waggonquerrichtung 18 und mittig zwischen den beiden Waggonkopfstücken 11 angeordnet.

Die beiden Waggonseitenwände 6 (Fig. 1-4,15,16) weisen jeweils eine Wandinnenseite 27, eine dieser in Waggonquerrichtung 18 gegenüberliegende Wandaußenseite 28, eine Wandoberkante 29 und eine Wandunterkante 30 auf. Außerdem weisen die beiden Waggonseitenwände 3 eines Güterwaggons 3 jeweils zwei endseitige Auflagerstege 31 und einen dazwischen angeordneten, mittigen Lastaufnahmesteg 32 auf. Die beiden Auflagestege 31 und der Lastaufnahmesteg 32 sind miteinander fest verbunden, insbesondere einstückig ausgebildet. Der Lastaufnahmesteg 32 dient in an sich bekannter Weise zur Aufnahme bzw. Lagerung des Waggonaufsatzes 8. Dazu sind z.B. an den Lastaufnahmestegen 32 jeweils zwei von der Wandoberkante 29 nach oben abstehende Fixierelemente, insbesondere Fixierblöcke 33 vorhanden.

Die beiden Auflagerstege 31 dienen zur schwenkbaren Lagerung der Waggonseitenwände 6 an den Waggonkopfstücken 11, insbesondere den Rahmengestellen 14, um die jeweilige Seitenwandschwenkachse 24. Dazu weisen die Waggonseitenwände 6, insbesondere jeweils vier, Lagerarme 34 auf, die jeweils einendig mit den Auflagerstegen 31 fest, also unverschieblich und unverdrehbar, verbunden sind, insbesondere verschweißt mit diesen sind. Jeder Auflagersteg 31 weist insbesondere zwei Lagerarme 34 auf. Andernendig, also an ihreren freien Enden, weisen die Lagerarme 34 der Waggonseitenwände 6 analog zu den Lagerarmen 22 des Waggonuntergestells 7 ein Schwenklager 35 zur Lagerung der Waggonseitenwände 6 um die Seitenwandschwenkachsen 24 auf. Das heißt, jeweils ein Lagerarm 22 des Waggonuntergestells 7 ist mit einem der Lagerarme 34 der Waggonseitenwände 6 mittels der Schwenklager 23;35, also an den freien Enden der Lagerarme 22;34, um die jeweilige Seitenwandschwenkachse 24 schwenkbar verbunden. Dabei sind die beiden miteinander verbundenen Lagerarme 22;34 vorzugsweise derart gestaltet, dass sie ineinander verschwenken können. Beispielsweise weisen die Lagerarme 22 des Waggonuntergestells 7 dazu zwei voneinander beabstandete Hebelarme 22a auf. In einer eingeklappten Stellung der Waggonseitenwände 6 sind die Lagerarme 34 der Waggonseitenwände 6 jeweils zwischen den beiden Hebelarmen 22a eines Lagerarms 22 des Waggonuntergestells 7 angeordnet und die Lagerarme 22;34.

Dabei sind jeweils zwei Lagerarme 34 an jedem Auflagersteg 31 befestigt. Einer der beiden Lagerarme 34 ist an einem ersten, äußeren, dem Lastaufnahmesteg 32 abgewandten Stegende 31 a des Auflagersteges 31 angeordnet und der andere Lagerarm 34 ist an einem zweiten, inneren, dem Lastaufnahmesteg 32 zugewandten Stegende 31 b des Auflagersteges 31 angeordnet. Die Lagerarme 34 sind insbesondere jeweils an der Wandinnenseite 27 im Bereich der Wandunterkante 30 befestigt. Die Lagerarme 34 erstrecken sich außerdem vorzugsweise von der Wandinnenseite 27 weg und nach unten über die Wandunterkante 30 hinaus.

Des Weiteren ist die Wandunterkante 30 vorzugsweise im Bereich der Auflagerstege 31 nach oben zur Wandoberkante 29 hin eingezogen. Die Wandunterkante 30 weist also im Bereich der Auflagerstege 31 jeweils eine zur Wandoberkante 29 hin gerichtete Auskehlung 36 auf. Die Auskehlung 36 dient dazu, dass der Rangierer an das vorgeschriebene Handbremsrad heran kommt und dieses betätigen kann.

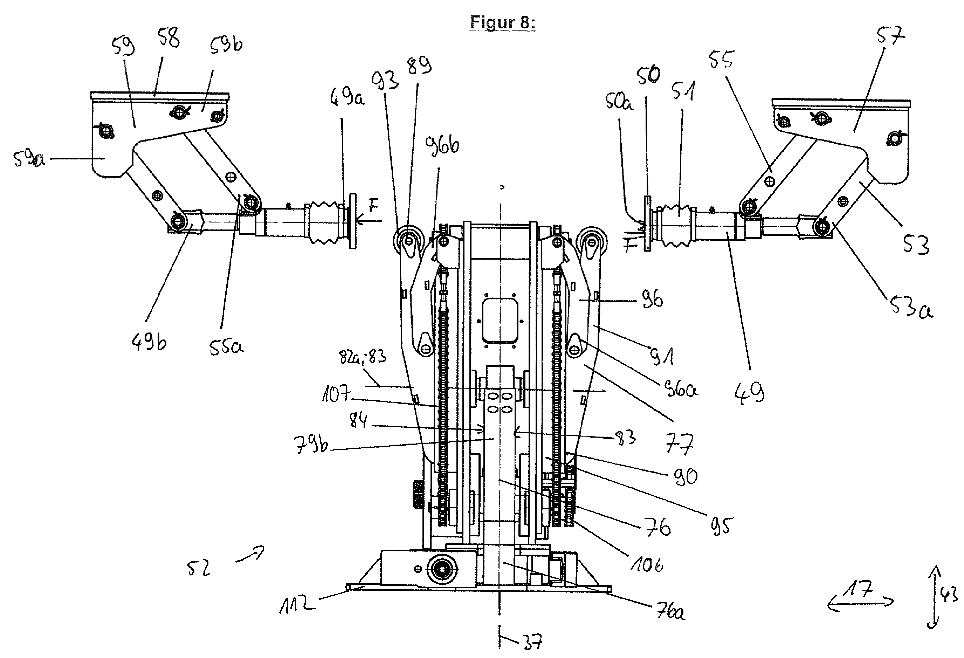

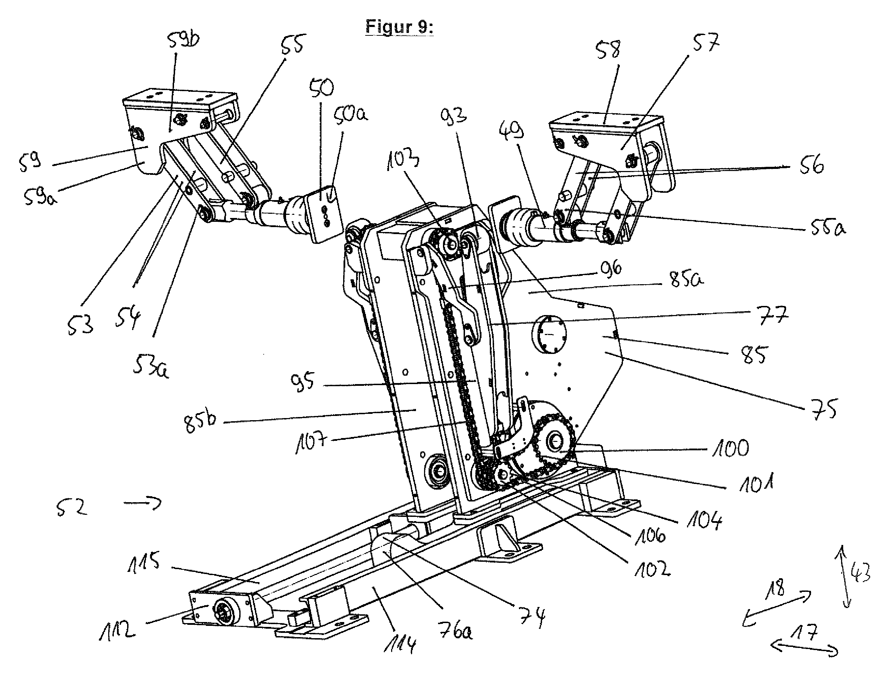

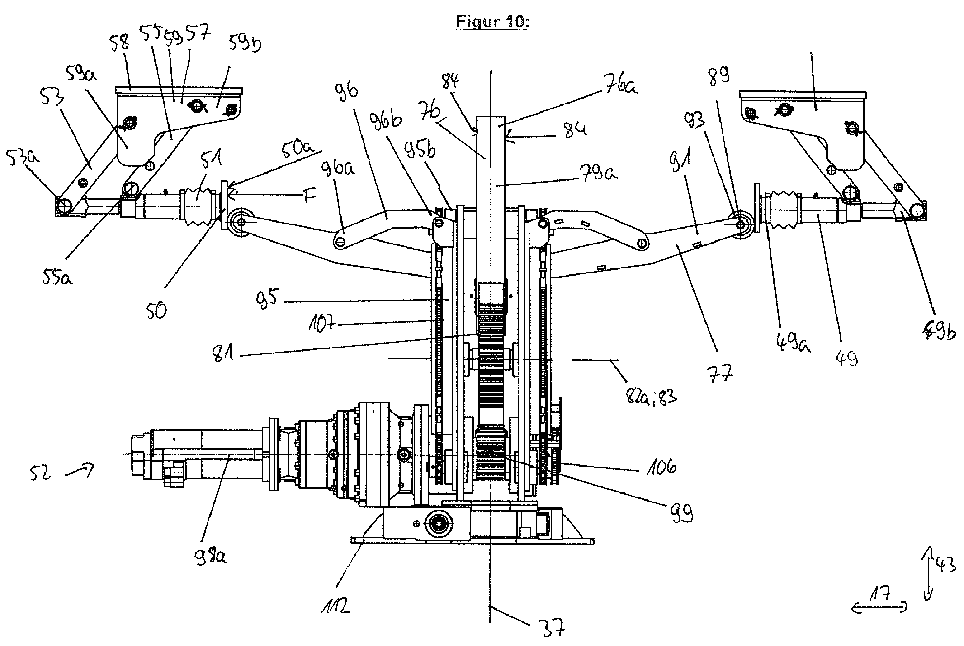

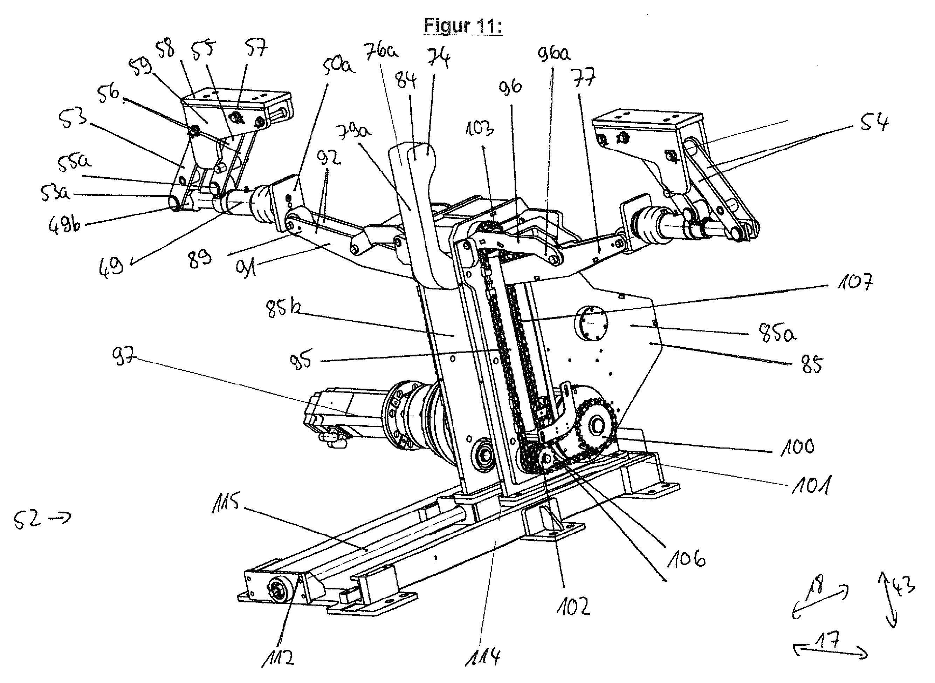

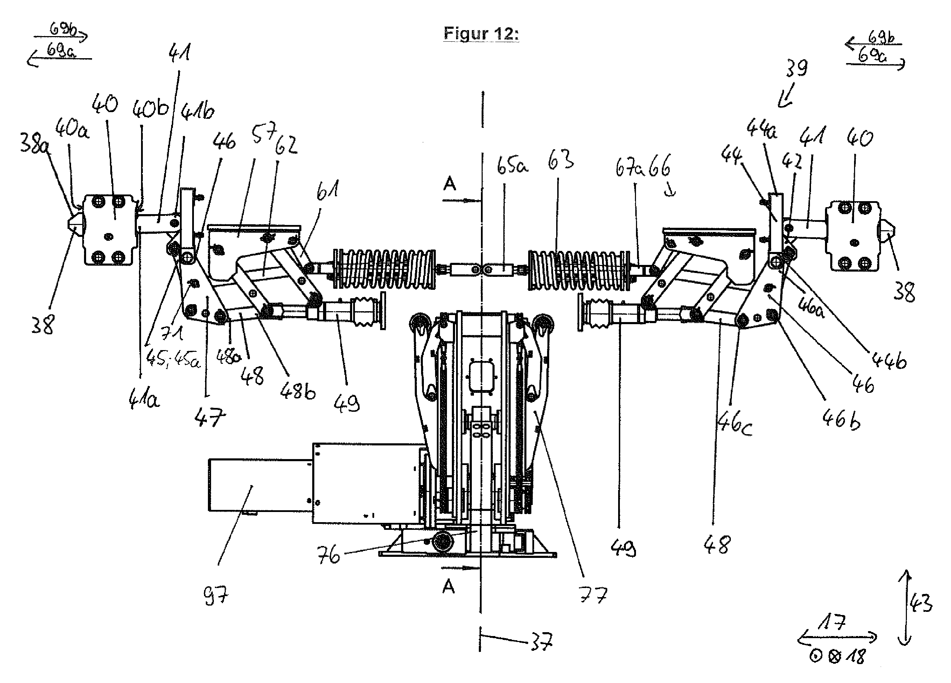

Jeder Güterwaggon 3 weist zudem zumindest vier erste Verriegelungseinrichtungen 39 (Fig. 8-13,18) zur Verriegelung bzw. Arretierung der Waggonseitenwände 6 in ihrer eingeklappten Stellung (Fig. 1-3) auf. Insbesondere sind für jede Waggonseitenwand 6 jeweils zumindest zwei erste Verriegelungseinrichtungen 39 vorhanden, wobei jeweils eine erste Verriegelungseinrichtung 39 pro Auflagersteg 31 vorhanden ist. Die Verriegelungseinrichtungen 39 sind also jeweils im Bereich der Auflagerstege 31 angeordnet und verriegeln diese. Die Verriegelungseinrichtungen 39 sind bevorzugt jeweils symmetrisch zu einer zur Querebene 26 parallelen Symmetrieebene 37 ausgebildet. Die Symmetrieebenen 37 sind jeweils, insbesondere mittig, zwischen dem inneren und äußeren Kopfstückende 19;20 angeordnet.

Eine erste Verriegelungseinrichtung 39 weist jeweils zwei in Waggonlängsrichtung 17 hin- und her verfahrbare Verriegelungsbolzen 38 auf, die beidseits der Symmetrieebene 37 angeordnet sind und spiegelverkehrt in Bezug zu dieser angeordnet und ausgebildet sind. Ein Verriegelungsbolzen 38 weist jeweils ein freies, insbesondere der Symmetrieebene 37 abgewandtes, Betätigungsende 38a und ein, insbesondere der Symmetrieebene 37 zugewandtes, Verbindungsende 38b auf. Das Betätigungsende 38a ist vorzugsweise kegelförmig ausgebildet. Die Verriegelungsbolzen 38 sind jeweils in einem Lagergehäuse 40 in Waggonquerrichtung 18 hin- und her verschieblich geführt. Die beiden Lagergehäuse 40 sind fest, also unverschieblich und unverdrehbar mit dem Rahmengestell 14 verbunden. Insbesondere sind die Lagergehäuse 40 jeweils außenseitig an einem der Längsträger 15 befestigt, insbesondere angeschraubt. Ein Lagergehäuse 40 ist dabei an dem ersten Untergestellstirnende 7a und das zweite Lagergehäuse 40 ist an dem zweiten Untergestellstirnende 7b angeordnet. Die Lagergehäuse 40 weisen in Waggonlängsrichtung 17 gesehen jeweils ein erstes, insbesondere der Symmetrieebene 37 abgewandtes, Gehäusestirnende 40a und ein zweites, insbesondere der Symmetrieebene 37 zugewandtes, Gehäusestirnende 40b auf. An den beiden Gehäusestirnenden 40a;40b sind die Lagergehäuse 40 jeweils offen.

Die ersten Verriegelungseinrichtungen 39 weisen außerdem für jeden Verrieglungsbolzen 38 jeweils einen, bevorzugt identischen, Hebelmechanismus 66 zur Betätigung, also zum Ein-und Ausfahren, des Verriegelungsbolzens 38 auf. Die beiden Hebelmechanismen 66 sind beidseits der Symmetrieebene 37 angeordnet spiegelverkehrt in Bezug zu dieser ausgebildet und angeordnet.

Insbesondere ist pro Hebelmechanismus 66 jeweils ein langgestreckter bzw. länglicher Antriebshebel 41 vorhanden. Der Antriebshebel 41 ist einendig, also an einem ersten Antriebshebelende 41 a, mit dem Verbindungsende 38b des jeweiligen Verriegelungsbolzens 38 um eine zur Waggonquerrichtung 18 parallele Drehachse drehbar und ansonsten unverdrehbar und unverschieblich verbunden. Andernendig, also an einem zweiten Antriebshebelende 41 b, ist der Antriebshebel 41 mit einem Kulissenstein 42 ebenfalls um eine zur Waggonquerrichtung 18 parallele Drehachse drehbar und ansonsten unverdrehbar und unverschieblich verbunden.

Der Kulissenstein 42 ist in eine zur Waggonquerrichtung 18 und zur Waggonlängsrichtung 17 senkrechte, insbesondere vertikale, Waggonhöhenrichtung 43 in einer Lagerplatte 44 hin- und her verschieblich geführt. Bevorzugt weist die Lagerplatte 44 dazu ein C-Profil auf. Die Lagerplatte 44 ist zudem fest, also unverdrehbar und unverschieblich, mit dem Rahmengestell 14 verbunden. Insbesondere ist die Lagerplatte 44 ebenfalls jeweils außenseitig an einem der Längsträger 15 befestigt, insbesondere angeschraubt. Infolgedessen stehen der Kulissenstein 42 und somit das zweiten Antriebshebelende 41 b mit dem Rahmengestell 14 um eine zur Waggonquerrichtung 18 parallele Drehachse drehbar und ansonsten unverdrehbar, aber in Waggonhöhenrichtung 43 verschieblich in Verbindung. Die Lagerplatte 44 weist zudem ein oberes Lagerplattenstirnende 44a und ein unteres Lagerplattenstirnende 44b auf. Der Kulissenstein 42 ist vom unteren zum oberen Lagerplattenstirnende 44a;b und umgekehrt verfahrbar.

Mit dem Kulissenstein 42 ist zudem ein langgestreckter bzw. länglicher Kopplungshebel 45 verbunden. Der Kopplungshebel 45 ist einendig, also an einem ersten Kopplungshebelende 45a um eine zur Waggonquerrichtung 18 parallele Drehachse drehbar und ansonsten unverdrehbar und unverschieblich mit dem Kulissenstein 42 verbunden. Somit steht das erste Kopplungshebelende 45a mit dem Rahmengestell 14 um eine zur Waggonquerrichtung 18 parallele Drehachse drehbar und ansonsten unverdrehbar, in Waggonhöhenrichtung 43 verschieblich und ansonsten unverschieblich in Verbindung. Der Kopplungshebel 45 erstreckt sich dabei nach unten vom Kulissenstein 42 weg. Der Kopplungshebel 45 ist somit insbesondere unterhalb des Antriebshebels 41 angeordnet. Andernendig, also an einem zweiten Kopplungshebelende 45b ist der Kopplungshebel 45 um eine zur Waggonquerrichtung 18 parallele Drehachse drehbar und ansonsten unverdrehbar und unverschieblich mit einem Dreieckshebel 46 verbunden.

Der Dreieckshebel 46 weist vorzugsweise zwei voneinander beabstandete und zueinander parallele Platten 47 auf, die sich flächenmäßig jeweils senkrecht zur Waggonquerrichtung 18 erstrecken. Die Platten 47 weisen jeweils einen dreieckigen Umriss auf und sind fest miteinander verbunden sowie in Waggonquerrichtung 18 fluchtend zueinander angeordnet. Der Dreieckshebel 46 weist somit insgesamt einen dreieckigen Umriss und drei Ecken 46a;46b;46b auf. An einem ersten Eck 46a ist der Dreieckshebel 46 um eine zur Waggonquerrichtung 18 parallele Drehachse drehbar und ansonsten unverdrehbar und unverschieblich an dem unteren Lagerplattenstirnende 44b mit der rahmenfesten Lagerplatte 44 verbunden. Somit ist der Dreieckshebel 46 an seinem ersten Eck 46a um eine zur Waggonquerrichtung 18 parallele Drehachse drehbar und ansonsten unverdrehbar und unverschieblich mit dem Rahmengestell 14 verbunden. An seinem zweiten Eck 46b ist der Dreieckshebel 46 um eine zur Waggonquerrichtung 18 parallele Drehachse drehbar und ansonsten unverdrehbar und unverschieblich an dem zweiten Kopplungshebelende 45b mit dem Kopplungshebel 45 verbunden. An einem dritten Eck 46c ist der Dreieckshebel 46 ebenfalls um eine zur Waggonquerrichtung 18 parallele Drehachse drehbar und ansonsten unverdrehbar und unverschieblich mit einem langgestreckten bzw. länglichen Zwischenhebel 48 verbunden. Sowohl der Kopplungshebel 45 als auch der Zwischenhebel 48 sind dabei vorzugsweise zwischen den beiden Platten 47 angeordnet, können also zwischen diesen verschwenken bzw. in den Dreieckshebel 46 hinein verschwenken.

Der Zwischenhebel 48 ist einendig, also an einem ersten Zwischenhebelende 48a mit dem Dreieckshebel 46 verbunden. Andernendig, also an einem zweiten Zwischenhebelende 48b, ist der Zwischenhebel 48 um eine zur Waggonquerrichtung 18 parallele Drehachse drehbar und ansonsten unverdrehbar und unverschieblich mit einem langgestreckten bzw. länglichen Lastaufnahmehebel 49 verbunden.

Der Lastaufnahmehebel 49 weist ein Lastaufnahmeende 49a und ein Abtriebsende 49b auf. An den Lastaufnahmehebel 49 greift die erfindungsgemäße Schwenk- und Entriegelungsvorrichtung 52 an, worauf weiter unten näher eingegangen wird. Am Abtriebsende 49b ist der Lastaufnahmehebel 49 mit dem Zwischenhebel 48 verbunden. Am Lastaufnahmeende 49a ist eine Lastaufnahmeplatte 50 vorhanden, die sich flächenmäßig senkrecht zur Längserstreckung des Lastaufnahmehebels 49 erstreckt. Die Lastaufnahmeplatte 50 weist eine freie, ebene Lastaufnahmefläche 50a auf. Der Lastaufnahmehebel 49 weist in eine Längserstreckung parallel zur Waggonlängsrichtung 17 auf. An die Lastaufnahmeplatte 50 schließt sich vorzugsweise ein elastischer Bereich 51 an, der z.B. durch eine Teller- oder Spiralfeder gebildet ist. Der elastische Bereich 51 dient als Überlastschutz.

An seinem Abtriebsende 49b steht der Lastaufnahmehebel 49 außerdem auch mit einem ersten, langgestreckten bzw. länglichen, Parallelogrammhebel 53 um dieselbe Drehachse wie mit dem Zwischenhebel 48 drehbar und ansonsten unverdrehbar und unverschieblich in Verbindung. Der erste Parallelogrammhebel 53 weist ein erstes Parallelogrammhebelende 53a und ein zweites Parallelogrammhebelende auf. Am ersten Parallelogrammhebelende 53a ist der erste Parallelogrammhebel 53 mit dem Lastaufnahmehebel 49 verbunden. Der erste Parallelogrammhebel 53 erstreckt sich von dem Lastaufnahmehebel 49 nach oben weg. Der erste Parallelogrammhebel 53 weist zudem zweckmäßigerweise zwei plattenförmige, zueinander parallele Hebelarme 54 auf, die voneinander beabstandet sind, aber fest miteinander verbunden sind. Außenseitig an den beiden Hebelarmen 54 ist jeweils ein abstehender Anschlagzapfen 65 vorgesehen. Der Anschlagzapfen 65 ist zwischen dem ersten und zweiten Parallelogrammhebelende 53a;, bevorzugt näher an dem ersten Parallelogrammhebelende 53a angeordnet.

Des Weiteren steht der Lastaufnahmehebel 49 mit einem langgestreckten bzw. länglichen zweiten Parallelogrammhebel 55 um eine zur Waggonquerrichtung 18 parallele Drehachse drehbar und ansonsten unverdrehbar und unverschieblich in Verbindung. Der zweite Parallelogrammhebel 55 ist, insbesondere mittig, zwischen dem Lastaufnahmeende 49a und dem Abstriebsende 49b mit dem Lastaufnahmehebel 49 verbunden. Zudem weist der zweite Parallelogrammhebel 55 ebenfalls ein erstes Parallelogrammhebelende 55a und ein zweites Parallelogrammhebelende auf. Am ersten Parallelogrammhebelende 55a ist der zweite Parallelogrammhebel 55 mit dem Lastaufnahmehebel 49 verbunden. Der zweite Parallelogrammhebel 55 erstreckt sich parallel zum ersten Parallelogrammhebel 53. Auch der zweite Parallelogrammhebel 55 weist zudem zweckmäßigerweise zwei plattenförmige, zueinander parallele Hebelarme 56 auf, die voneinander beabstandet sind, aber fest miteinander verbunden sind.

Die beiden Parallelogrammhebel 53;55 sind jeweils an ihren zweiten Parallelogrammhebelenden um eine zur Waggonquerrichtung 18 parallele Drehachse drehbar und ansonsten unverdrehbar und unverschieblich mit einer rahmenfesten Konsole 57 verbunden.

Die Konsole 57 weist vorzugsweise eine plattenförmige, ebene Deckenwandung 58 auf, die sich flächenmäßig senkrecht zur Waggonhöhenrichtung 43 erstreckt. Des Weiteren ist die Konsole 57 außenseitig fest, also unverschieblich und unverdrehbar, mit dem jeweiligen Längsträger 15 verbunden (Fig. 16). Beispielsweise ist die Konsole 57 mit ihrer Deckenwandung 58 an eine horizontale Anschraubplatte 60 angeschraubt, die an eine Längsträgeraußenseite 15a angeformt ist. An die Deckenwandung 58 schließen sich zwei plattenförmige Seitenwandungen 59 an, die sich flächenmäßig vorzugsweise senkrecht zur Waggonquerrichtung 18 erstrecken. Die Seitenwandungen 59 weisen bevorzugt eine L-Form auf, mit einem kurzen L-Schenkel 59a und einem langen L-Schenkel 59b. Der kurze L-Schenkel 59a ist dem Verriegelungsbolzen 38 zugewandt. Die beiden Parallelogrammhebel 53;55 sind jeweils mit ihren zweiten Parallelogrammhebelenden zwischen den beiden Seitenwandungen 59 angeordnet und mit diesen, z.B. über Bolzen, verbunden. Dabei ist der erste Parallelogrammhebel 53 vorzugsweise jeweils im Bereich des kurzen L-Schenkels 59a mit den Seitenwandungen 59 verbunden und der zweite Parallelogrammhebel 55 ist vorzugsweise im Bereich des langen L-Schenkels 59b mit den Seitenwandungen 59 verbunden. Die beiden Parallelogrammhebel 53;55 bilden mit dem Lastaufnahmehebel 49 und der Konsole 57 ein Hebel-Parallelogramm. Infolgedessen dienen die beiden verschwenkbaren Parallelogrammhebel 53;55 zur verschieblichen Lagerung des Lastaufnahmehebels 49 am Waggonrahmen 9. Das Hebel-Parallelogramm gewährleistet, dass der Lastaufnahmehebel 49 derart verschoben wird, das er bei Verschwenken der Parallelogrammhebel 53;55 immer parallel zur Waggonlängsrichtung 17 bleibt. Der Lastaufnahmehebel 49 ist also, insbesondere über die beiden Parallelogrammhebel 53;55 verschieblich, aber unverdrehbar mit dem Waggonrahmen 9, insbesondere mit dem Rahmengestell 14 verbunden. Das Hebel-Parallelogramm ist zudem eine sehr robuste Anordnung.

Am freien Ende der langen L-Schenkel 59b sind die Seitenwandungen 59 außerdem mit einem kurzen, langgestreckten bzw. länglichen Verbindungshebel 61 um eine zur Waggonquerrichtung 18 parallele Drehachse drehbar und ansonsten unverdrehbar und unverschieblich verbunden. Der Verbindungshebel 61 weist ein erstes Verbindungshebelende 61a und ein zweites Verbindungshebelende 61 b auf. Mit dem ersten Verbindungshebelende 61 a ist der Verbindungshebel 61 zwischen den beiden Seitenwandungen 59 angeordnet und mit diesen verbunden. Der Verbindungshebel erstreckt sich von der Konsole 57 nach unten weg, im wesentlichen parallel zu den beiden Parallelogrammhebeln 53;55, ist aber deutlich kürzer als diese ausgebildet. An seinem zweiten Verbindungshebelende 61 b ist der Verbindungshebel 61 mit einer Verbindungsstange 62 um eine zur Waggonquerrichtung 18 parallele Drehachse drehbar und ansonsten unverdrehbar und unverschieblich verbunden.

Die Verbindungsstange 62 ist an ihrem ersten Verbindungsstangenende 62a mit dem Verbindungshebel 61 verbunden. An ihrem zweiten Verbindungsstangenende 62 ist die Verbindungsstange 62 mit dem Dreieckshebel 46, insbesondere den beiden Platten 47, um eine zur Waggonquerrichtung 18 parallele Drehachse drehbar und ansonsten unverdrehbar und unverschieblich verbunden. Die Drehachse bzw. der Anlenkpunkt liegt dabei in der Mitte der flächenmäßigen Erstreckung des Dreieckshebels 46 bzw. der beiden Platten 47. Die Verbindungsstange 62 ist mit ihrem zweiten Verbindungsstangenende 62b zwischen den beiden Platten 47 angeordnet. Außerdem ist die Verbindungsstange 62 unterhalb der Konsole und unterhalb der Lagerplatte 44 angeordnet und ist zwischen den Hebelarmen 54;55 der beiden Parallelogrammhebel 53;55 durch geführt.

An ihrem ersten Verbindungsstangenende 62a ist die Verbindungsstange 62 außerdem um eine zur Waggonquerrichtung 18 parallele Drehachse drehbar und ansonsten unverdrehbar und unverschieblich mit einer eine Feder 63 aufweisenden Federanordnung 64 verbunden. Die Feder 63 ist vorzugsweise eine Schraubenfeder. Die Federanordnung 64 weist einen ersten Teil 65 und einen zweiten Teil 67 auf. Der erste Teil 65 weist eine erste Anschlussstange 65a, einen Flansch 65b, drei Stangen 65c und ein Abstützelement 65d mit einem weiteren Flansch 65e und einem zylindrischen Abschnitt 65f auf. Die einzelnen Elemente 65a-f sind alle fest miteinander verbunden. Insbesondere ist die erste Anschlussstange 65a einendig mit der Verbindungsstange 62 und andernendig mit dem Flansch 65b verbunden. An den Flansch 65b schließen sich zudem die drei zueinander parallelen Stangen 65c an. Andernendig sind die Stangen 65c mit dem Abstützelement 65d verbunden. Die Feder 63 ist um die Stangen 65c und um den zylindrischen Abschnitt 65f des Abstützelements 65c herum angeordnet und stützt sich einendig an dem Flansch 65e ab. Der zweite Teil 67 weist eine zweite Anschlussstange 67a, eine mittige Stange 67b mit einendig einem Flansch 67c und eine Buchse 67d mit einendig einem Flansch 67e auf. Die zweite Anschlussstange 67a und die mittige Stange 67b sind fest miteinander verbunden. Zudem ist die mittige Stange 67 andernendig mit der Buchse 67d verbunden. Die Buchse 67d ist außerdem in eine zur Waggonlängsrichtung 17 parallele Richtung hin- und her verschieblich auf den Stangen 65c geführt. Die Feder 63 ist zudem ebenfalls um die Buchse 67d herum angeordnet und stützt sich an deren Flansch 67e ab. Dadurch werden die beiden Teile 65,67 von der Feder 63 derart belastet bzw. angetrieben, dass die beiden Flansche 65e;67e auseinander und dadurch die damit verbundenen Anschlussstangen 65a;65b zueinander gedrückt werden. Die Federn 63 halten dadurch die Verrieglungsbolzen 38 in ihrer ausgefahrenen, verriegelnden Stellung, worauf weiter unten näher eingegangen wird.

Die beiden zweiten Anschlussstangen 67a der beiden Hebelmechanismen 66 einer ersten Verriegelungseinrichtung 39 sind entweder unverschieblich mit dem Rahmengestell 14 oder miteinander verbunden. Eine Federlängsachse 68, die parallel zur Wirkrichtung der Feder 63 ist, ist parallel zur Waggonlängsrichtung.

Im Folgenden wird nun die Wirkungsweise der ersten Verriegelungseinrichtung 39 näher erläutert:

In einer verriegelnden Stellung der ersten Verriegelungseinrichtung 39 (Fig. 2,3,8,9,12,14) sind die Verriegelungsbolzen 38 in ihrer ausgefahrenen Stellung angeordnet. In der ausgefahrenen Stellung ragen die Verriegelungsbolzen 38 jeweils mit ihrem Betätigungsende 38 aus dem ersten Lagergehäusestirnende 40a heraus und greifen jeweils in ein seitenwandfestes Verriegelungsgehäuse 70 ein. Die beiden Verrieglungsgehäuse 70 sind jeweils fest mit der zu verriegelnden Waggonseitenwand 6 verbunden, insbesondere an diese angeschraubt. Eines der beiden Verriegelungsgehäuse 70 ist dabei an dem ersten Stegende 31 a des Auflagersteges 31 und das andere Verriegelungsgehäuse 70 ist am zweiten Stegende 31 b angeordnet. Die Verriegelungsgehäuse 70 sind innenseitig in Bezug zur Waggonseitenwand 6 angeordnet. Des Weiteren weisen die Verriegelungsgehäuse 70 jeweils eine Aussparung 70a (Fig. 16) auf, in die die Verriegelungsbolzen 38 formschlüssig eingreifen. Die Aussparung 70a ist somit infolgedessen vorzugsweise konisch bzw. kegelförmig ausgebildet. Dadurch wird die Waggonseitenwand 6 in ihrer eingeklappten Stellung gehalten. Die Verriegelungsbolzen 38 nehmen dabei insbesondere die Längskräfte auf, also die Kräfte, die auf die Güterwaggons 3 in Waggonlängsrichtung 17 wirken. Die Verriegelungsbolzen 38 einer Waggonseitenwand werden dabei auf Druck belastet. Außerdem nehmen die Verriegelungsbolzen 38 auch Vertikalkräfte und, insbesondere bei Kurvenfahrt, auch Kräfte in Waggonquerrichtung 18 auf.

In der verriegelnden Stellung sind zudem die Antriebshebel 41 nahezu horizontal, also nahezu parallel zur Waggonlängsrichtung 17, ausgerichtet, also fluchtend zu dem jeweiligen Verriegelungsbolzen 38. Die Kulissensteine 42 sind dazu in ihrer unteren Stellung, an einem unteren Lagerplattenende 44b der Lagerplatte 44 angeordnet. Die Verriegelungsbolzen 38 werden dadurch mittels Selbsthemmung in ihrer verriegelnden Stellung gehalten.

Selbsthemmung beschreibt in der Mechanik den durch Reibung verursachten Widerstand gegen ein Verrutschen oder ein Verdrehen zweier aneinander liegender Körper. Sobald die Haftreibung überschritten ist, sind die Körper nicht mehr selbsthemmend. Die Selbsthemmung wird durch den Neigungswinkel, die Oberflächenrauigkeit der Auflageflächen, die Werkstoffpaarung, die Gleitgeschwindigkeit, gegebenenfalls durch den Schmierstoff und die Erwärmung beeinflusst. Um Selbsthemmung zu erreichen, wird der resultierende Winkel kleiner als der arctan der Haftreibungszahl µ ausgeführt.

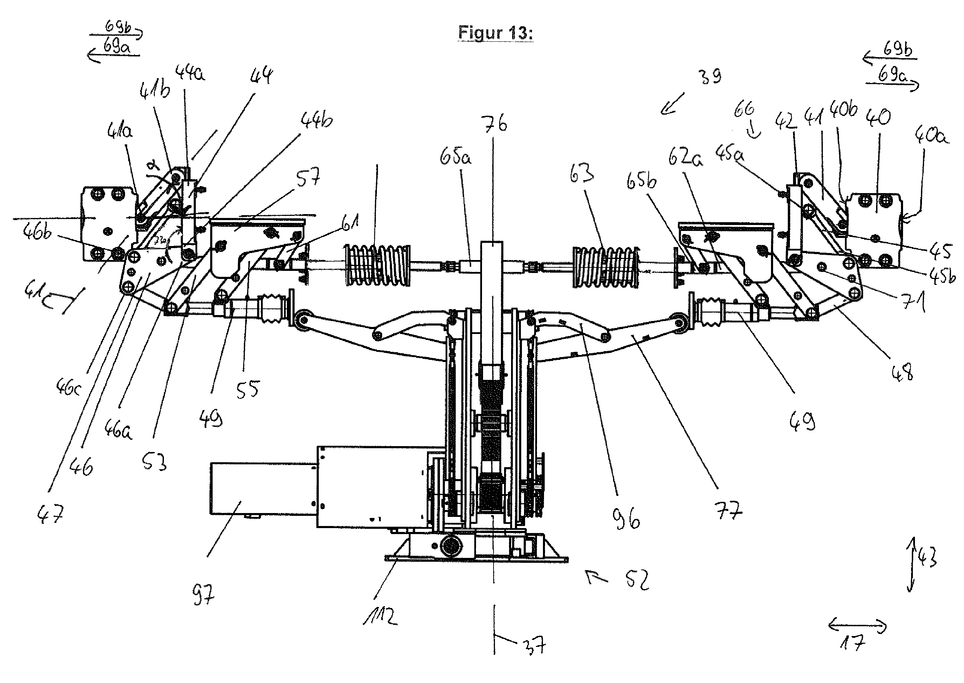

Im vorliegenden Fall kommt es also darauf an, dass ein Neigungswinkel α (Fig. 13) zwischen einer Antriebshebellängsachse 41 c und der Waggonlängsrichtung 17 kleiner als der Haftreibwinkel ϕ₀ ist. Der Haftreibwinkel ϕ₀ ist der Grenzwinkel, ab dem bei Einwirkung einer Druckkraft auf den Kulissenstein 42 über den Antriebshebel 41 eine Verschiebung des Kulissensteins 42 nach oben resultiert. Der Haftreibwinkel ϕ₀ hängt wie oben beschrieben vom Reibbeiwert (Haftreibungszahl) µ₀ ab und somit von den sich berührenden Materialien (ϕ₀ = arctan µ₀). Im vorliegenden Fall liegt der Haftreibwinkel ϕ₀ bei 7° (Stahl auf Stahl). Den Bereich zwischen einem Winkel α von 0° und dem Haftreibwinkel ϕ₀ nennt man auch Selbsthemmungsbereich. Es kommt also darauf an, dass der Winkel α in der verriegelnden Stellung im Selbsthemmungsbereich liegt, das heißt α < arctan µ₀. Vorzugsweise beträgt der Winkel α in der verriegelnden Stellung 2°. Durch diese Anordnung wird die Selbsthemmung der Verriegelungsbolzen 38 realisiert. Denn für eine Verschiebung des Kulissensteins 42 nach oben ist eine Kraftkomponente in vertikaler Richtung notwendig. Durch eine Kraft in Waggonlängsrichtung 17 ist keine Verschiebung möglich. Und je größer die Kraft ist, die in Waggonlängsrichtung 17 von dem jeweiligen Verriegelungsbolzen 38 über den jeweiligen Antriebshebel 41 und den Kulissenstein 42 auf die Lagerplatte 44 übertragen wird, desto größer ist die zur Verschiebung notwendige vertikale Kraft.

Vorteilhaft ist zudem, dass die Selbsthemmung auch ohne die Federn 63 automatisch durch Einwirkung von Schwerkraft erreicht wird. Dies ist unter anderem bei der Montage vorteilhaft. Denn ohne Krafteinwirkung von außen, sind die Kulissensteine 42 aufgrund der Schwerkraft zwangsweise in ihrer unteren Stellung angeordnet, werden in diese Stellung angetrieben. Die Federn 63 unterstützen dies lediglich. Der Winkel α in der verriegelnden Stellung wird durch einen nicht dargestellten Anschlag bzw. ein Widerlager, der bzw. das die Bewegung des Verriegelungsbolzens 38 in eine Bolzenverriegelungsrichtung 69a begrenzt, eingestellt.

Wie oben bereits erläutert, werden die Verriegelungsbolzen 38 aber auch zusätzlich mittels der Federn 63 in ihrer verriegelnden, ausgefahrenen Stellung gehalten. Die Verriegelungsbolzen 38 stehen also mit den Federn 63 in die zur Waggonlängsrichtung 17 parallele Bolzenverriegelungsrichtung 69a translatorisch antreibbar in Verbindung. Denn die Federn bewirken ein Zusammenfahren der beiden Anschlussstangen 65a;67a und halten die Federanordnung 64 in ihrer eingefahrenen Stellung. Dadurch sind auch die Verbindungsstangen 62 in ihrer zurück gezogenen Stellung. In dieser Stellung sind die Verbindungsstangen 62 etwas nach unten geneigt ausgerichtet. Die Verbindungsstangen 62 ziehen zudem jeweils mit ihrem zweiten Verbindungsstangenende 62b im Bereich des Anlenkbereichs 71 an dem jeweiligen Dreieckshebel 46, so dass die Dreieckshebel 46 in ihrer unteren Stellung gehalten werden. In dieser unteren Stellung ist der Anlenkbereich 71 unterhalb des ersten Ecks 46a angeordnet. Zudem sind auch das zweite und dritte Eck 46b;46c des jeweiligen Dreieckshebels 46 um das erste Eck 46a nach unten verschwenkt. Das heißt, das zweite und dritte Eck 46b;46c der Dreieckshebel 46 sind jeweils ebenfalls unterhalb des ersten Ecks 46a angeordnet. Zudem weisen die dritten Ecken 46c zur Symmetrieebene 37 hin.

Dadurch, dass das zweite Eck 46b nach unten verschwenkt ist, ist das zweite Kopplungshebelende 45b des Kopplungshebels 45 ebenfalls nach unten verschwenkt. Der Kopplungshebel 45 ist im Wesentlichen vertikal ausgerichtet. Zudem zieht der Kopplungshebel 45 mit seinem ersten Kopplungshebelende 45a an dem Kulissenstein 42, zieht diesen nach unten und hält ihn dadurch in seiner unteren Stellung. Die Kulissensteine 42 stehen also mit den Federn 63 vertikal nach unten translatorisch antreibbar in Verbindung.

In der verriegelnden Stellung sind die beiden Lastaufnahmehebel 49 der ersten Verriegelungseinrichtungen 39 ebenfalls in einer unbetätigten, eingefahrenen Stellung. In dieser Position werden die Lastaufnahmehebel 49 ebenfalls mittels der Federn 63 gehalten. Denn diese bewirken die oben beschriebene Stellung der Dreieckshebel 46. Dadurch werden die Zwischenhebel 48, die mit den dritten Ecken 46c der Dreieckshebel 46 in Verbindung stehen, zur Symmetrieebene 37 hin gedrückt. Und die Zwischenhebel 48 wiederum drücken die Lastaufnahmehebel 49 aufeinander zu bzw. zur Symmetrieebene 37 hin. Die beiden Lastaufnahmehebel 49 stehen also mit den Federn 63 aufeinander zu bzw. zur Symmetrieebene 37 hin antreibbar in Verbindung.

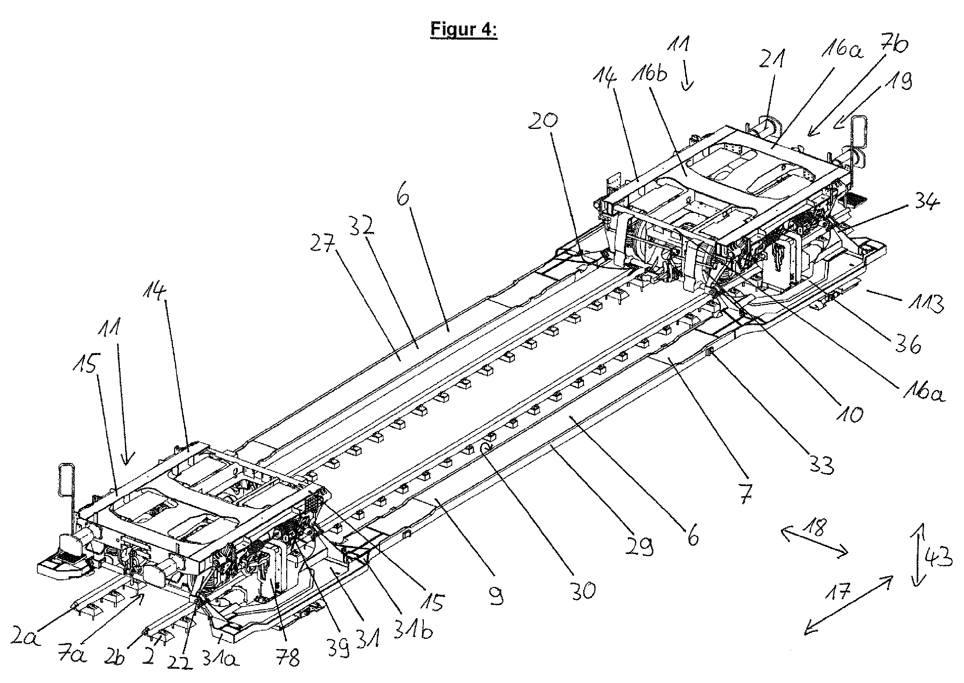

Um die Verriegelung zu lösen, also die Verriegelungsbolzen 38 in eine zur Bolzenverriegelungsrichtung 69a entgegengesetzte Bolzenentriegelungsrichtung 69b aus den Verriegelungsgehäusen 70 heraus zu ziehen, werden nun die beiden Lastaufnahmehebel 49 auseinander bewegt, also von der Symmetrieebene 37 weg bewegt (siehe Fig.4,10,11,13,16). Die Verriegelungsbolzen 38 stehen also mit den Lastaufnahmehebeln 49 in Bolzenentriegelungsrichtung 69b antreibbar in Verbindung.

In ihrer betätigten Stellung sind die beiden Lastaufnahmehebel 49 also auseinander gefahren. Die beiden Lastaufnahmehebel 49 bleiben dabei aufgrund ihrer Führung mittels der Parallelogrammhebel 53;55 parallel zur Waggonlängsrichtung 17. Der Antrieb der Lastaufnahmehebel 49 erfolgt durch Aufbringen einer Antriebskraft F auf die Lastaufnahmeplatten 50. Die Kraftrichtung der Antriebskraft F ist zumindest teilweise parallel zur Bolzenverriegelungsrichtung 69a. Selbstverständlich sind die Kraftrichtungen der Antriebskräfte F, die auf die beiden Lastaufnahmehebel 49 einer ersten Verriegelungseinrichtung 39 aufzubringen sind, zueinander entgegengesetzt.

Durch die Bewegung der Lastaufnahmehebel 49 von ihrer unbetätigten Stellung in ihre auseinandergefahrene, betätigte Stellung treiben die Lastaufnahmehebel 49 über die Zwischenhebel 48 die Dreieckshebel 46 an und verschwenken diese um die Dreieckshebeldrehachse 73 in eine Dreieckshebelantriebsrichtung 73a (Fig. 13). Dabei werden das zweite und dritte Eck 46b;46b, und somit auch jeweils die ersten Kopplungshebelenden 45a der Kopplungshebel 45, jeweils nach oben und von der Symmetrieebene 37 weg bewegt. Dadurch werden die Kulissensteine 42, jeweils angetrieben durch den jeweiligen Kopplungshebel 45 nach oben verfahren. Dies bewirkt wiederum, dass auch die zweiten Antriebshebelenden 41 b mit dem jeweiligen Kulissenstein 42 nach oben verfahren werden und die Antriebshebel 41 derart verschwenken, dass die ersten Antriebshebelenden 41 a in Bolzenentriegelungsrichtung 69b zur Symmetrieebene 37 hin bewegt werden. Da die Verbindungssenden 38b der Verriegelungsbolzen 38 mit den ersten Antriebshebelenden 41 a unverschieblich in Verbindung stehen, werden auch die Verbindungsenden 38b in Bolzenentriegelungsrichtung 69b zur Symmetrieebene 37 hin bewegt. Aufgrund der linear verschieblichen Lagerung der Verrieglungsbolzen 38 werden folglich die gesamten Verriegelungsbolzen 38 in Bolzenentriegelungsrichtung 69b zur Symmetrieebene 37 hin bewegt und somit die Betätigungsenden 38a aus den Verriegelungsgehäusen 70 heraus gezogen und in die Lagergehäuse 40 eingezogen. Dadurch ist die Verriegelung der Waggonseitenwände 6 gelöst und diese können nach unten weg geklappt werden, worauf weiter unten näher eingegangen wird.

Aufgrund der oben beschriebenen Drehung der Dreieckshebel 46 werden auch die Anlenkbereiche 71 um die Dreieckshebeldrehachse 73 in Dreieckshebelantriebsrichtung 73a verschwenkt und dadurch von der Symmetrieebene 37 weg bewegt. Dies führt über die Verbindungsstangen 62 zu einer Zugkraft auf die ersten Anschlussstangen 65a die gegen die Kraft der Federn 63 von der Symmetrieebene 37 und den zweiten Anschlussstangen 67b weg gefahren werden. Die Federn 63 werden dabei gestaucht. Das Auseinanderdrücken der Lastaufnahmehebel 49 erfolgt also gegen die Kraft der Federn 63, die dabei gespannt werden.

Infolgedessen kehren alle Hebel und Stangen nach Entlastung der Lastaufnahmehebel 49, angetrieben durch die Kraft der Federn 63 in jeweils umgekehrter Bewegungsrichtung in ihre nicht betätigten Stellungen zurück. Insbesondere kehren die Verriegelungsbolzen 38 nach Entlastung der Lastaufnahmehebel 49 in ihre ausgefahrene Stellung zurück.

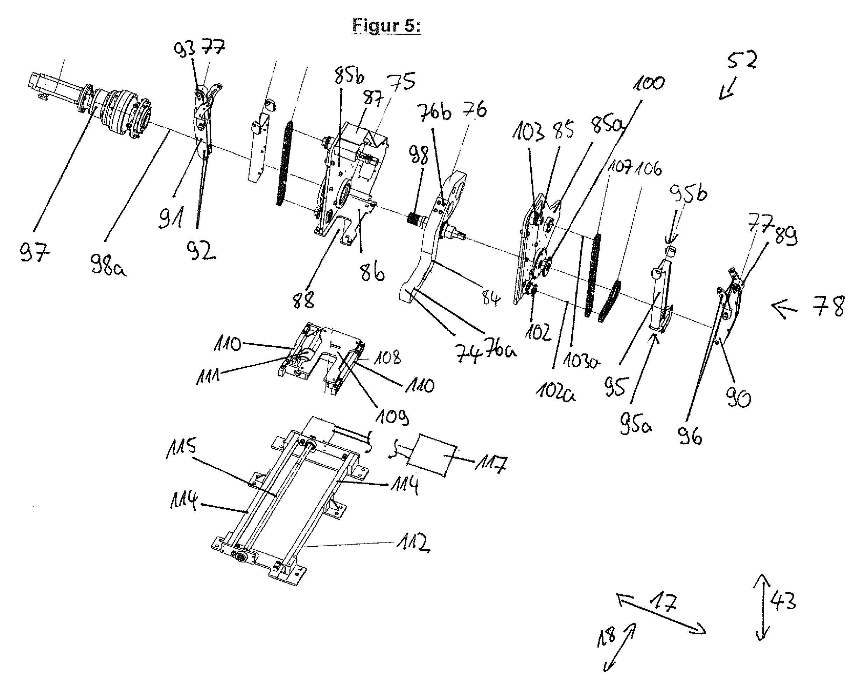

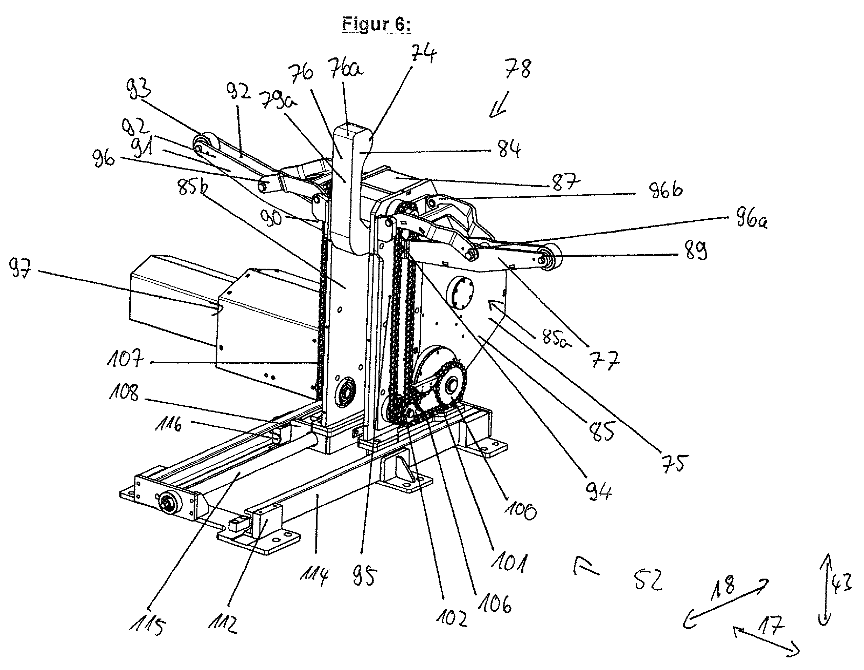

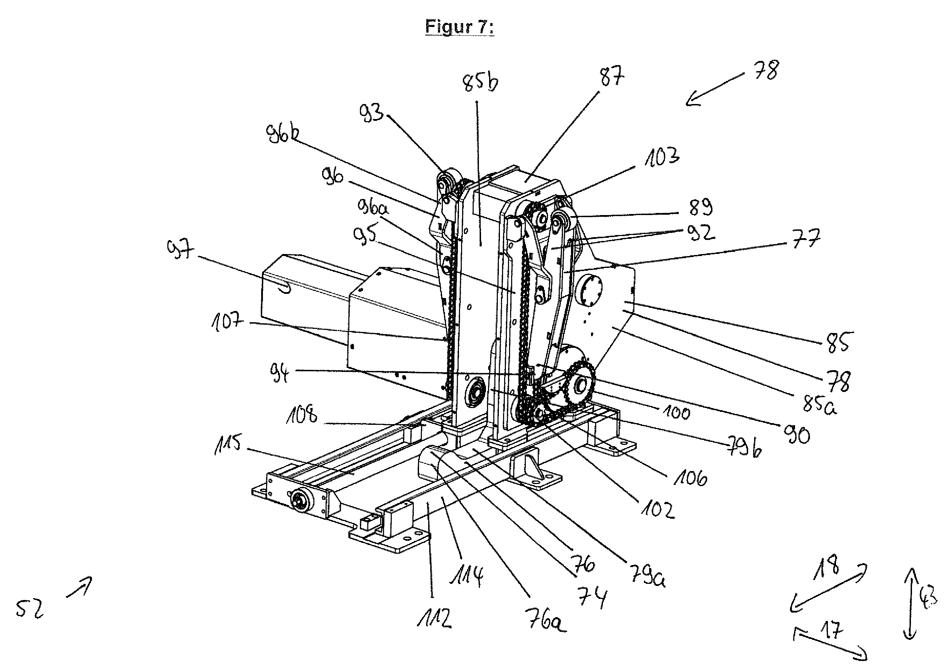

Im Folgenden werden nun die erfindungsgemäßen Schwenk- und Entriegelungsvorrichtungen 52 (Fig. 2-12,13,14,16), die zur Betätigung der ersten Verriegelungseinrichtungen 39 dienen, näher erläutert:

Die Schwenk- und Entriegelungsvorrichtungen 52 dienen, wie oben bereits erläutert, zum Lösen der Verriegelung der Waggonseitenwände 6 durch die Verriegelungsbolzen 38 sowie zum kontrollierten, geführten Auf- und Einklappen der Waggonseitenwände 6. Dabei ist für jede erste Verriegelungseinrichtung 39 eine Schwenk- und Entriegelungsvorrichtung 52 vorhanden.

Eine der Schwenk- und Entriegelungsvorrichtungen 52 weist jeweils eine Schwenk- und Entriegelungseinrichtung 78 mit einem Schwenkhebel 76, zwei jeweils ein- und ausfahrbaren Betätigungshebeln 77 und einem Gehäuse 75 zur Lagerung des Schwenkhebels 76 und der Betätigungshebel 77 auf.

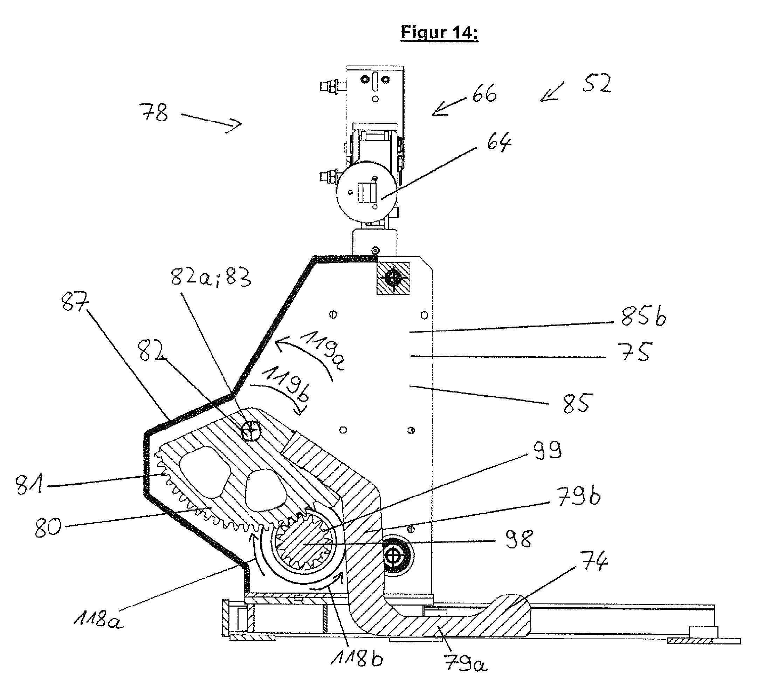

Der Schwenkhebel 76 (Fig. 14) weist ein Lagerende 76a zur Lagerung des Schwenkhebels 76 und ein Betätigungsende 76b zur Betätigung und Aufnahme der Waggonseitenwand 6 auf. Des Weiteren weist der Schwenkhebel 76 vorzugsweise einen L-förmigen Querschnittsverlauf (Fig. 14) mit einem ersten L-Schenkel 79a und einem zweiten L-Schenkel 79b auf. Der erste L-Schenkel 79a des Schwenkhebels 76 weist einendig, an seinem freien Ende, das Betätigungsende 76b mit einer abgerundeten, verbreiterten Betätigungsnase 74 auf. Andernendig schließt sich an den ersten L-Schenkel 79a der zweite L-Schenkel 79b an. Am freien, dem ersten L-Schenkel 79a abgewandten Ende des zweiten L-Schenkels ist das Lagerende 76a des Schwenkhebels 76 angeordnet. Am Lagerende 76a weist der Schwenkhebel 76 ein Zahnradsegment 80 zum Antrieb des Schwenkhebels 76 auf. Das Zahnradsegment 80 ist ein Teil eines Zahnrades. Das Zahnradsegment 80 weist infolgedessen an seinem äußeren Umfang eine Außenverzahnung 81 auf. Außerdem weist das Zahnradsegment 80 eine durchgehende Lageraussparung 82 mit einer Aussparungsachse 82a auf. Die Aussparungsachse 82a ist koaxial zu einer Mittelachse der Außenverzahnung 81 des Zahnradsegments 80.

Der Schwenkhebel 76 weist zudem vorzugsweise zwei ebenflächige Hebelseitenflächen 84 auf, die senkrecht zur Aussparungsachse 82a sind. Die Lageraussparung 82 dient zur drehbaren Lagerung des Schwenkhebels 76 im Gehäuse 75 um die Aussparungsachse 82a. Infolgedessen handelt es sich bei der Aussparungsachse 82a um eine Schwenkhebeldrehachse 83.

Das Gehäuse 75 weist zwei zueinander beabstandete Gehäuseseitenwandungen 85, eine Gehäusebodenwandung 86, sowie eine Gehäuseumfangswandung 87 auf. Die Gehäuseumfangswandung 87 und die Gehäusebodenwandung 86 sind zwischen den beiden Gehäuseseitenwandungen 85 angeordnet. Die Gehäuseseitenwandungen 85 weisen jeweils eine Wandungsaußenfläche 85a und eine Wandungsinnenfläche 85b auf. Der Schwenkhebel 76 ist innerhalb des Gehäuses 75, angeordnet und bevorzugt an den beiden Gehäuseseitenwandungen 85 gelagert. Insbesondere sind die Hebelseitenflächen 84 parallel zu den Gehäuseseitenwandungen 85. In der Gehäusebodenwandung 86 ist eine längliche Nut 88 vorhanden, die zum Durchgriff des Schwenkhebels 76 dient.

Die beiden identischen, länglichen Betätigungshebel 77 sind beidseits der Symmetrieebene 37 und spiegelbildlich zu dieser angeordnet und ausgebildet. Die Betätigungshebel 77 sind außerhalb des Gehäuses 75 angeordnet. Außerdem weisen die beiden Betätigungshebel 77 jeweils ein freies Betätigungsende 89 zur Betätigung der Lastaufnahmehebel 49 und ein Lagerende 90 zur Lagerung auf. Des Weiteren weisen die Betätigungshebel 77 vorzugsweise zwei zueinander parallele, ebenflächige Hebelseitenflächen 91 auf. Zudem weisen die Betätigungshebel 77 vorzugsweise zwei voneinander beabstandete, miteinander fest verbundene Hebelarme 92 auf. Am Betätigungsende 89 weisen die Betätigungshebel 77 bevorzugt eine Betätigungsrolle 93 auf. Die Betätigungsrolle 93 ist mit dem jeweiligen Betätigungshebel 77 um eine zu den Hebelseitenflächen 91 senkrechte Drehachse drehbar und ansonsten unverschieblich und unverdrehbar verbunden.

Am Lagerende 90 weisen die Betätigungshebel 77 einen Kulissenblock 94 auf. Der Kulissenblock 94 ist ebenfalls mit dem jeweiligen Betätigungshebel 77 um eine zu den Hebelseitenflächen 91 senkrechte bzw. zur Waggonlängsrichtung 17 parallele Drehachse drehbar und ansonsten unverschieblich und unverdrehbar verbunden. Des Weiteren sind die Kulissenblöcke 94 jeweils in einer Führungsschiene 95, bevorzugt mit C-Profil, in Waggonhöhenrichtung 43 hin-und her verschieblich geführt. Die Führungsschienen 95 sind jeweils an der Wandungsaußenfläche 85a einer der beiden Gehäuseseitenwandungen 85 fest befestigt. Damit ist das Lagerende 90 der Betätigungshebel 77 jeweils in Waggonhöhenrichtung 43 hin- und her verschieblich mit dem Gehäuse 75, insbesondere den Gehäuseseitenwandungen 85 verbunden.

Zur weiteren Lagerung der Betätigungshebel 77 am Gehäuse 75 sind pro Betätigungshebel 77 jeweils zwei Lagerhebel 96 vorhanden. Die länglichen Lagerhebel 96 weisen jeweils ein erstes Lagerhebelende 96a und ein zweites Lagerhebelende 96b auf. An ihrem ersten Lagerhebelende 96a sind die Lagerhebel 96 jeweils um eine zur Waggonlängsrichtung 17 parallele Drehachse und ansonsten unverdrehbar und unverschieblich mit dem jeweiligen Betätigungshebel 77 verbunden. Der Lager- bzw. Verbindungsbereich liegt dabei im wesentlichen mittig zwischen dem Betätigungsende 89 und dem Lagerende 90 des jeweiligen Betätigungshebels 77. Außerdem sind die beiden Lagehebel 96 beidseits des Betätigungshebels 77, benachbart zu dessen Hebelseitenflächen 91 angeordnet. An ihrem zweiten Lagerhebelende 96b sind die Lagerhebel 96 jeweils um eine zur Waggonlängsrichtung 17 parallele Drehachse und ansonsten unverdrehbar und unverschieblich mit dem Gehäuse 75, insbesondere den Gehäuseseitenwandungen 85, verbunden.

Die Schwenk- und Entriegelungseinrichtung 78 weist selbstverständlich auch geeignete Antriebsmittel, insbesondere einen Rotationsmotor, zum Antrieb des Schwenkhebels 76 und der Betätigungshebel 77 auf. Insbesondere weist die Schwenk- und Entriegelungseinrichtung 78 einen ersten Antriebsmotor 97, z.B. einen Elektromotor, insbesondere einen Gleichstrommotor ausgeführt als Servomotor oder einen Wechselstrommotor, ausgeführt als geregelter oder ungeregelter Asynchronmotor zum Antrieb des Schwenkhebels 76 und der Betätigungshebel 77 auf.

Außerdem ist eine Antriebswelle 98 vorhanden, die mit dem ersten Antriebsmotor 97 um ihre Wellenachse 98a hin- und her schwenkbar antreibbar in Verbindung steht. Die Antriebswelle 98 durchgreift das Gehäuse 75 und weist eine umlaufende Außenverzahnung 99 auf, die mit der Außenverzahnung 81 des Schwenkhebels 76 kämmt, also in Eingriff steht. Infolgedessen steht der Schwenkhebel 76 über die Antriebswelle 98 mit dem ersten Antriebsmotor 97 um die Schwenkhebeldrehachse 83 hin- und her schwenkbar antreibbar in Verbindung.

Die Antriebswelle 98 weist außerdem zwei Kettenräder 100 jeweils mit Außenverzahnung 101 auf. Die beiden Kettenräder 100 sind parallel zur Wellenachse 98a gesehen beidseits der umlaufenden Außenverzahnung 99 angeordnet und mit der Antriebswelle fest verbunden. Die beiden Kettenräder 100 sind außerhalb des Gehäuses 75 angeordnet und dienen zum Antrieb der Betätigungshebel 77.

Dazu sind außerdem pro Betätigungshebel 77 jeweils ein erstes und zweites Ritzel 102;103, ebenfalls jeweils mit Außenverzahnung 104;105 vorhanden. Die beiden Ritzel 102;103 sind um eine zur Waggonlängsrichtung 17 parallele Ritzeldrehachse 102a und ansonsten fest mit dem Gehäuse 75, insbesondere mit der mit dem Gehäuse 75 fest verbundenen Führungsschiene 95 verbunden und außerhalb des Gehäuses 75 angeordnet. Das erste Ritzel 102 ist im unteren Bereich des Gehäuses 75 bzw. an einem unteren Ende der Führungsschiene 95 angeordnet und steht jeweils mit dem einen der beiden Kettenräder 100 um die Ritzeldrehachse 102a hin- und her drehbar antreibbar in Verbindung. Dazu ist vorzugsweise eine erste Kette 106 um das jeweilige Kettenrad 100 und das jeweilige erste Ritzel 102 gespannt.

Das zweite Ritzel 103 ist oberhalb des ersten Ritzels 102, vertikal fluchtend zu diesem angeordnet. Insbesondere ist das zweite Ritzel 103 im oberen Bereich des Gehäuses 75 bzw. an einem oberen Ende der Führungsschiene 95 angeordnet. Um das erste und zweite Ritzel 102;103 ist eine zweite Kette 107 gespannt. Die zweite Kette 107 erstreckt sich somit vertikal, in Waggonhöhenrichtung 43 und dient zum oszillierenden Antrieb des jeweiligen Kulissenblocks 94. Dazu ist der Kulissenblock 94 fest mit der zweiten Kette 107 verbunden.

Infolgedessen steht das Lagerende 90 der Betätigungshebel 77, insbesondere jeweils über einen Kulissenblock 94, eine zweite Kette 107, die beiden Ritzel 102;103, die erste Kette 106, ein Kettenrad 100 und die Antriebswelle 98, mit dem ersten Antriebsmotor 97 in Waggonhöhenrichtung 43 oszillierend, hin-und her verfahrbar antreibbar in Verbindung.

Gemäß einem Aspekt der Erfindung ist die Schwenk- und Entriegelungseinrichtung 78 zudem in Waggonquerrichtung 18 oszillierend, translatorisch antreibbar. Dazu weist die erfindungsgemäße Schwenk- und Entriegelungsvorrichtung 52 einen Schlitten 108 zur Lagerung des Gehäuses 75 mitsamt der an diesem gelagerten Bauteile auf. Das Gehäuse 75 ist fest, also unverschieblich und unverdrehbar auf dem Schlitten 108 gelagert. Der Schlitten 108 weist dazu eine Lagerplatte 109 auf, auf der das Gehäuse 75 mit der Gehäusebodenwandung 86 angeordnet ist und vorzugsweise verschraubt ist. Außerdem weist der Schlitten 108 zwei seitliche Führungsbalken 110 mit bevorzugt rechteckigem Querschnitt auf, die eine Längserstreckung parallel zur Waggonquerrichtung 18 aufweisen. Des Weiteren weist der Schlitten 108 eine Spindelmutter 111 auf.

Der Schlitten 108 wiederum ist in Waggonquerrichtung 18 begrenzt hin- und her verschieblich auf einem Lagergestell 112 gelagert, welches wiederum direkt neben der Gleisanlage 2 mit dem jeweiligen Untergrund 113 permanent fest verbunden ist, insbesondere verschraubt ist. Das Lagergestell 112 weist zwei seitliche Führungsschienen 114, bevorzugt mit C-Profil, auf, in denen die Führungsbalken 110 gleitgelagert sind. Außerdem weist das Lagergestell 112 eine Spindel 115 auf, die durch die Spindelmutter 111 durch geführt ist und mit dieser einen linearen Spindelantrieb 116 bildet. Zudem ist ein zweiter Antriebsmotor 117, vorzugsweise ein Rotationsmotor, z.B. ein Elektromotor, insbesondere ein Gleichstrommotor ausgeführt als Servomotor, oder ein Wechselstrommotor, ausgeführt als geregelter oder ungeregelter Asynchronmotor, vorhanden, mit dem die Spindel 115 um ihre Spindelachse hin- und her drehbar antreibbar in Verbindung. Der Antriebsmotor 117 ist fest mit dem Lagergestell 112 verbunden. Infolgedessen steht die Schwenk- und Entriegelungseinrichtung 78, insbesondere über den Spindeltrieb 116, mit dem Antriebmotor 117 in Waggonquerrichtung 18 hin- und her, also zum Güterwaggon 3 hin und von diesem weg, antreibbar in Verbindung.

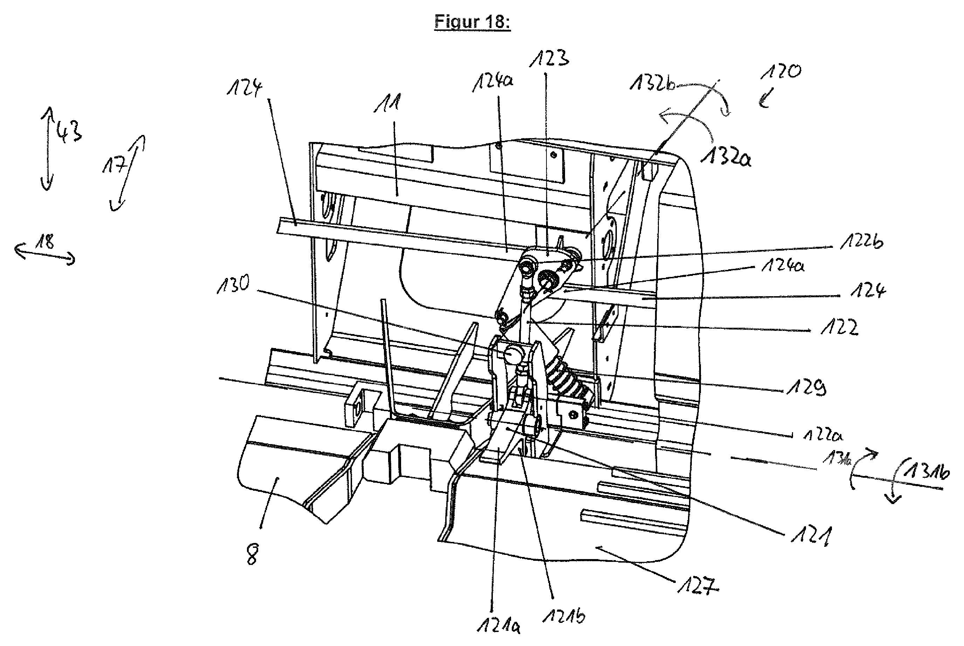

Gemäß einem weiteren Aspekt der Erfindung weisen die Güterwaggons 3 der erfindungsgemäßen Güterumschlagvorrichtung 1 zur zusätzlichen Verriegelung der Waggonseitenwände 6 in ihrer eingeklappten Stellung bevorzugt zumindest eine zusätzliche, zweite Verriegelungseinrichtung 120 auf (Fig. 15, 18). Vorzugsweise sind zwei zweite Verriegelungseinrichtungen 120 vorhanden, wobei jeweils eine zweite Verriegelungseinrichtung 120 am inneren Kopfstückende 20 eines der beiden Waggonkopfstücke 11 angeordnet ist.

Jede der beiden zweiten Verriegelungseinrichtungen 120 weist jeweils einen Kipphebel 121, eine damit verbundene Verbindungsstange 122, eine Kopplungsplatte 123, zwei Kopplungsstangen 124 sowie zwei Sicherheitsklinken 125 und zwei Ösen 126 und eine Druckfeder 129 auf.

Der Kipphebel 121 weist eine T-Form mit zwei Kipphebelarmen 121a;121b auf, die winklig, insbesondere rechtwinklig, zueinander angeordnet sind. Zudem ist der Kipphebel 121 mittig in Bezug zur Erstreckung des Güterwaggons 3 in Waggonquerrichtung 18 angeordnet. Der erste Kipphebelarm 121 a ist mit dem zweiten Kipphebelarm 121b fest verbunden. In dem Verbindungsbereich der beiden Kipphebelarme 121a;121b ist der Kipphebel 121 um eine zur Waggonquerrichtung 18 parallele Drehachse und ansonsten unverschieblich und unverdrehbar an dem Waggonrahmen 9, insbesondere am Waggonkopfstück 11, gelagert. In einer unbetätigten Stellung (Fig. 15, 18) ist der erste Kipphebelarm 121 a im Wesentlichen horizontal angeordnet und liegt auf dem Waggonaufsatz 8 auf.

Ebenfalls an dem Verbindungsbereich der beiden Kipphebelarme 121 a;121 b ist eine Verbindungsstange 122 mit ihrem einen, ersten freien Stangenende 122a gelenkig, das heißt um alle drei Raumachsen drehbar, und ansonsten unverschieblich mit dem Kipphebel 121 verbunden. An ihrem anderen, zweiten freien Stangenende 122b ist die Verbindungsstange 122 gelenkig und ansonsten unverschieblich mit der Kopplungsplatte 123 verbunden.

Die Kopplungsplatte 123 weist eine flächenmäßige Erstreckung senkrecht zur Waggonlängsrichtung 17 auf und ist ihrerseits um eine zur Waggonlängsrichtung 17 parallele Drehachse und ansonsten unverschieblich und unverdrehbar mit dem Waggonrahmen 9, insbesondere dem Waggonkopfstück 11 verbunden. Die Kopplungsplatte 123 ist oberhalb des Kipphebels 121 angeordnet. Auch die Kopplungsplatte 123 ist zudem mittig in Bezug zur Erstreckung des Güterwaggons 3 in Waggonquerrichtung 18 angeordnet. Zudem sind an der Kopplungsplatte 123 die beiden Kopplungsstangen 124 um eine zur Waggonlängsrichtung 17 parallele Drehachse und ansonsten unverschieblich und unverdrehbar befestigt. Andernendig sind die Kopplungsstangen 124 jeweils mit den Sicherheitsklinken 125 um eine zur Waggonlängsrichtung 17 parallele Drehachse und ansonsten unverschieblich und unverdrehbar verbunden. Die Kopplungsstangen 124 erstrecken sich also, vorzugsweise parallel zur Waggonquerrichtung 18, von der Waggonmitte jeweils zu einer der beiden Waggonseitenwände 6 hin.

Die Druckfeder 129 ist einendig mit der Kopplungsplatte 123 und andernendig mit dem Waggonrahmen 9, insbesondere dem Waggonkopfstück 11, jeweils um eine zur Waggonlängsrichtung 17 parallele Drehachse und ansonsten unverschieblich und unverdrehbar verbunden. Die Druckfeder 129 ist an einem unteren Ende der unterhalb der Kopplungsplatte 123 mit dieser verbunden und erstreckt sich schräg, also sowohl in Waggonlängsrichtung 17 als auch in Waggonquerrichtung 18. Die beiden Kopplungsstangen 124 sind oberhalb der Druckfeder 129 angeordnet.

Die beiden Sicherheitsklinken 125 weisen jeweils eine L-Form mit zwei zueinander winklig angeordneten Klinkenarmen 125a;125b auf. Nahe eines Verbindungsbereichs der beiden Klinkenarme 125a;125b sind die Sicherheitsklinken 125 jeweils um eine zur Waggonlängsrichtung 17 parallele Drehachse und ansonsten unverschieblich und unverdrehbar mit dem Waggonrahmen 9, insbesondere dem Waggonkopfstück 11, bevorzugt dem Lagerarm 22a, verbunden. Am freien Ende des ersten Klinkenarms 125a ist jeweils die Kopplungsstange 124 angeordnet. Am freien Ende des zweiten Klinkenarms 125b weisen die Sicherheitsklinken 125 jeweils einen Haken (nicht dargestellt) auf, mit dem die Sicherheitsklinken 125 in ihrer verriegelnden Stellung in jeweils eine der beiden Ösen 126 eingreifen, welche fest an der Wandinnenseite 27 der jeweiligen Waggonseitenwand 6 angeordnet sind.

In der verriegelnden Stellung der zweiten Verriegelungseinrichtung 120 bzw. der verriegelten Stellung der Waggonseitenwand 6 liegen die Kipphebel 121 mit ihren ersten Kipphebelarmen 121 a zudem jeweils oberseitig auf einer Aufsatzbodenwandung 127 der Waggonaufsätze 8 auf. Die Waggonaufsätze 8 weisen jeweils eine Wannenform mit der Aufsatzbodenwandung 127 und zwei Aufsatzseitenwandungen 128 auf. Die Aufsatzseitenwandungen 128 weisen sind in die Waggonseitenwände 6 eingehängt und zwischen den Fixierblöcken 33 angeordnet und somit in Waggonlängsrichtung 17 fixiert. Gehalten werden der Kipphebel 121 und die Sicherheitsklinken 125 in der verriegelnden Stellung durch die Druckfeder 129, welche das untere Ende der Kopplungsplatte 123 nach oben drückt. Dadurch werden die Kopplungsstangenenden 124a aufeinander zu gedrückt und dadurch die Sicherheitsklinken 125 in die Ösen 126 hinein gedrückt. Zudem wird der Kipphebel 121 über die Verbindungsstange 122 an den Waggonaufsatz 8 angedrückt. Die Sicherheitsklinken 125 stehen also mit der Druckfeder 129 in ihre verriegelnde Stellung antreibbar in Verbindung.

Im Folgenden wird nun die Funktionsweise der erfindungsgemäßen Güterumschlagvorrichtung 1 mit den erfindungsgemäßen Schwenk- und Entriegelungsvorrichtungen 52 näher erläutert:

Wenn sich kein Güterzug in der erfindungsgemäßen Güterumschlagvorrichtung 1 befindet, befinden sich die Schwenk- und Entriegelungsvorrichtungen 52 in ihrer nicht betätigten, wartenden Ausgangsstellung (Fig. 2,5,7,8,9,12,14). In der Ausgangstellung sind die Schwenk- und Entriegelungseinrichtungen 78 von der Gleisanlage 2 weg gefahren. Das heißt, die Schwenk- und Entriegelungseinrichtungen 78 liegen nicht im Verfahrweg der Güterwaggons 3. Zudem befinden sich sowohl der Schwenkhebel 76 als auch die Betätigungshebel 77 in ihrer nicht betätigten Ausgangstellung: Der Schwenkhebel 76 ist derart angeordnet, dass sein erster L-Schenkel 79a nach unten geklappt ist und insbesondere horizontal ausgerichtet ist. Die beiden Betätigungshebel 77 sind eingefahren. In dieser Stellung sind die Betätigungshebel 77 entlang der Führungsschienen 95 angeordnet und im Wesentlichen vertikal ausgerichtet. Dies wird dadurch erreicht, dass sich die Kulissenblöcke 94 jeweils in ihrer unteren Position, an einem unteren Führungsschienenende 95a der Führungsschienen 95 befinden.

Sobald ein Güterzug mit mehreren Güterwaggons 3 in der erfindungsgemäßen Güterumschlagvorrichtung 1 anhält, werden die Schwenk- und Entriegelungseinrichtungen 78 zu den wartenden Güterwaggons 3 hin gefahren. Dies geschieht durch Aktivierung der zweiten Antriebsmotoren 117. Insbesondere werden die Schwenk- und Entriegelungseinrichtungen 78 jeweils zu einem der Auflagestege 31 hin gefahren. In der hin gefahrenen Stellung (Fig. 3) durchgreifen die Betätigungshebel 77 die jeweilige Auskehlung 36 und die Betätigungsenden 89 der Betätigungshebel 77 sind jeweils zwischen den Lastaufnahmeplatten 50 der Lastaufnahmehebel 49 angeordnet, aber von diesen beabstandet (Fig. 8,9,12). Zudem sind die Schwenkhebeldrehachsen 83 koaxial zu den Seitenwandschwenkachsen 24.

Nachdem die Schwenk- und Entriegelungseinrichtungen 78 zu den wartenden Güterwaggons 3 hin gefahren sind, werden die ersten Antriebsmotoren 97 aktiviert. Diese bewirkt jeweils eine Rotation der Antriebswelle 98 um ihre Wellenachse 98a in eine erste Antriebswellendrehrichtung 118a (Fig.14). Die Antriebswelle 98 treibt dann zum einen über die Außenverzahnung 99 der Antriebswelle 98 und die Außenverzahnung 81 des Zahnradsegments 80 den Schwenkhebel 76 um die Schwenkhebeldrehachse 83 in eine erste Schwenkhebeldrehrichtung 119a an. Insbesondere wird der Schwenkhebel 76 derart angetrieben, dass sich der erste L-Schenkel 79a nach oben bewegt, aufgestellt wird. Der Schwenkhebel 76 wird so lange angetrieben, bis der L-Schenkel 79a im Wesentlichen vertikal ausgerichtet ist und die Betätigungsnase 74 an der Wandaußenseite 28 der jeweiligen Waggonseitenwand 6 im Bereich eines Auflagestegs 31 anliegt (Fig. 3,6,10,11,13). Dann wird der ersten Antriebsmotor 97 jeweils gestoppt.

Außerdem treibt die Antriebswelle 98 gleichzeitig über die beiden Kettenräder, die ersten Ketten 106, die Ritzel 102;103, die zweiten Ketten 107 und die Kulissenblöcke 94 die Betätigungshebel 77 derart an, dass die Betätigungshebel 77 ausgefahren werden. Insbesondere werden die Kulissenblöcke 94, angetrieben durch die zweiten Ketten 107 nach oben verfahren, zu einem oberen Führungsschienenende 95b. Aufgrund der Lagerung der Betätigungshebel 77 mittels der Lagerhebel 96 werden dabei die Betätigungsenden 89 der beiden Betätigungshebel 77 mit den Betätigungsrollen 93 in Waggonlängsrichtung 17 ausgefahren, also voneinander weg gefahren. Dabei werden die Betätigungsrollen 93 auf die Lastaufnahmeplatten 50 zu gefahren und kommen in Kontakt mit deren Lastaufnahmeflächen 50. Im weiteren Verlauf bewirken die Betätigungshebel 77 eine Antriebskraft F in Waggonlängsrichtung 17 auf die Lastaufnahmeflächen 50a und drücken somit die Lastaufnahmeflächen 50a, die Lastaufnahmeplatten 50 und darüber die beiden Lastaufnahmehebel 49 auseinander. Dies führt zur oben beschriebenen Entriegelung der Waggonseitenwandungen 6.

Infolgedessen sind die Antriebe des Schwenkhebels 76 und der Betätigungshebel 77 derart miteinander synchronisiert, insbesondere mechanisch gekoppelt, dass die jeweilige Entriegelung der Waggonseitenwand 6 und das Heranschwenken des Schwenkhebels 76 an die Waggonseitenwand 6 gleichzeitig erfolgt. Dabei ist die Kopplung derart ausgeführt, dass die vollständige Entriegelung der Waggonseitenwand 6 erfolgt ist, kurz bevor der Schwenkhebel 76 mit der Betätigungsnase 74 an die Waggonseitenwand 6 anschlägt. Um zu verhindern, dass die entriegelte Waggonseitenwand 6 aufgrund ihres Eigengewichts herunter klappt und dabei auf den Schwenkhebel 76 drauf fällt, sind die beiden zweiten Verriegelungseinrichtungen 120 vorhanden:

Denn sobald nun die Verriegelung durch die Verriegelungsbolzen 38 gelöst ist und die Schwenkhebel 76 an den Waggonseitenwänden 6 anliegen, werden die Waggonaufsätze 8 mittels der Hubeinrichtungen 12 von dem jeweiligen Waggongestell 7 abgehoben. Da die ersten Kipphebelarme 121 a oben auf den Aufsatzbodenwandungen 127 aufliegen, werden sie von der jeweiligen Aufsatzbodenwandung 127 nach oben mit genommen bzw. angetrieben und die Kipphebel 121 somit in eine erste Kipphebeldrehrichtung 131a verschwenkt. Die Kipphebel 121 stehen also jeweils mit einem Waggonaufsatz 8 in die erste Kipphebeldrehrichtung 131a antreibbar in Verbindung. Die Kipphebel 121 werden insbesondere soweit verschwenkt, bis die ersten Kipphebelarme 121 a im wesentlichen vertikal ausgerichtet sind und die zweiten Kipphebelarme 121b horizontal ausgerichtet sind. Das Verschwenken der Kipphebel 121 bewirkt, dass die Verbindungsstange 122 nach unten verschoben wird. Dadurch treibt die Verbindungsstange 122 die Kopplungsplatte 123 in eine erste Kopplungsplattendrehrichtung 132a an, so dass die beiden ersten Kopplungsstangenenden 124a der beiden Kopplungsstangen 124 auseinander gedrückt werden. Die Kopplungsstangen 124 wiederum treiben die Sicherheitsklinken 125 in eine erste Sicherheitsklinkendrehrichtung 133a an, so dass die Haken der Sicherheitsklinken 125 aus den Ösen 126 nach oben heraus schwenken. Die Waggonseitenwände 6 sind nun vollständig entriegelt. Beim Drehen der Kopplungsplatte 123 in die erste Kopplungsplattendrehrichtung 132a wird zudem die Druckfeder 129 so lange komprimiert, bis die Drehachse der Kopplungsplatte 123 und die beiden Drehachsen der Druckfeder 129 zueinander fluchtend angeordnet sind. Dies entspricht einem unteren Totpunkt der Druckfeder 129, in dem diese maximal komprimiert ist. Eine weitere Drehung der Kopplungsplatte 123 in die erste Kopplungsplattendrehrichtung 132a bewirkt eine Ausfederung der Druckfeder 129. Die Druckfeder 129 treibt nun die Kopplungsplatte 123 in die erste Kopplungsplattendrehrichtung 132a so lange an, bis der erste Kipphebelarm 121 a an einem Anschlagsteg 130 anschlägt und der Kipphebel 121 wieder in der verriegelnden Stellung ist. Der Kipphebel 121 wird also durch die Kraft der Druckfeder 129 in seiner verriegelnden Stellung gehalten.

Infolgedessen werden nun die ersten Antriebsmotoren 97 der einzelnen Schwenk- und Entriegelungseinrichtungen 78 aktiviert, wobei die Drehrichtung entgegengesetzt zur Drehrichtung vorher ist. Infolgedessen werden nun der Schwenkhebel 76 und die Betätigungshebel 77 in entgegengesetzte Richtungen wie zuvor angetrieben. Das heißt, die Antriebswelle 98 wird in eine zweite Antriebswellendrehrichtung 118b (Fig. 14) angetrieben und treibt den Schwenkhebel 76 in eine zweite Schwenkhebeldrehrichtung 119b an. Dabei wird der Schwenkhebel 76 derart angetrieben, dass sich der erste L-Schenkel 79 wieder nach unten bewegt, bis er wieder in seiner horizontalen Ausgangstellung ist. Dann wird der Ersten Antriebsmotor 97 wieder gestoppt. Da der Schwerpunkt der Waggonseitenwände 6 jeweils nicht vertikal fluchtend zu der jeweiligen Seitenwandschwenkachse 24 liegt, sondern weiter außen in Bezug zur Waggonseitenwand 6, wirkt aufgrund der Gewichtskraft der Waggonseitenwände 6 auf die Waggonseitenwände 6 ein Drehmoment. Dieses Drehmoment treibt die Waggonseitenwände 6 in eine Seitenwandausklapprichtung 134a (Fig. 16) um die jeweilige Seitenwandschwenkachse 24 an. Aufgrund dessen verschwenken die Waggonseitenwände 6 automatisch, angetrieben durch ihre Gewichtskraft mit den Schwenkhebeln 76 nach unten. Die Waggonseitenwände 6 werden somit von den Schwenkhebeln 76 geführt. Da jeweils die Seitenwandschwenkachse 24 koaxial zu den Schwenkhebeldrehachsen 83 der beiden die Waggonseitenwand 6 stützenden Schwenkhebel 76 ist, wird gewährleistet, dass die Betätigungsnasen 74 an den Waggonseitenwandungen 6 anliegen, ohne an diesen wesentlich entlang zu gleiten beim Ausklappen.

Gleichzeitig treibt die Antriebswelle 98 die beiden Betätigungshebel 77 derart an, dass die Betätigungshebel 77 wieder eingefahren werden. Insbesondere werden die Kulissenblöcke 94, angetrieben zurück nach unten verfahren, zu dem unteren Führungsschienenende 95a. Dadurch werden die Betätigungsenden 89 der beiden Betätigungshebel 77 mit den Betätigungsrollen 93 in Waggonlängsrichtung 17 eingefahren, also aufeinander zu gefahren. Das heißt, die Betätigungsrollen 93 werden von den Lastaufnahmeplatten 50 weg gefahren, wirken nicht mehr auf diese ein, und die Komponenten der ersten Verriegelungseinrichtung 39 kehren wie oben beschrieben in ihre verriegelnde Stellung zurück.

Wenn die Waggonseitenwände 6 vollständig ausgeklappt sind, befinden sie sich in den oben beschriebenen Lücken zwischen den Gleissträngen 2a;2b und den Förderbahnen. Infolgedessen können die Waggonseitenwände 6 nun von den Shuttlebalken 5 überfahren werden. Diese werden nun aktiviert und fahren in Waggonquerrichtung 18 über die weggeklappten Waggonseitenwände 6 hinweg unter die Waggonaufsätze 8. Dann werden die Waggonaufsätze 8 mittels der Hubeinrichtungen 12 auf den Shuttlebalken 5 abgesetzt. Die mit den Waggonaufsätzen 8 beladenen Shuttlebalken 5 werden in Waggonquerrichtung 18 über die weggeklappten Waggonseitenwände 6 hinweg von dem Waggonuntergestell 7 weg gefahren und in an sich bekannter Weise auf der dafür vorgesehenen Verladebahn 4 mittels der Hubeinrichtungen 13 abgesenkt und ent- und beladen.

Nachdem die Waggonaufsätze 8 wieder mit neuen Gütern beladen worden sind, werden die Waggonaufsätze 8 mittels der Hubeinrichtungen 13 der Shuttlebalken 5 von der Verladebahn 4 angehoben, von den Shuttlebalken 5 zu den wartenden Waggonuntergestellen 7 verfahren und von den gleisbettfesten Hubeinrichtungen 12 von den Shuttlebalken 5 abgehoben. Diese fahren wieder zurück in ihre Ausgangsposition weg von den Gleissträngen 2a;2b.

Nun werden wiederum die ersten Antriebsmotoren 97 aktiviert, so dass die Schwenkhebel 76 wieder nach oben schwenken. Die auf den Schwenkhebeln 76 liegenden Waggonseitenwände 6 werden dadurch, angetrieben von den Schwenkhebeln 76, wieder eingeklappt, wobei sie in eine zur Seitenwandausklapprichtung 134a entgegengesetzte Seitenwandeinklapprichtung 134b (Fig. 16) verschwenkt werden. Außerdem werden gleichzeitig wie oben beschrieben die Betätigungshebel 77 wieder ausgefahren, so dass die Verriegelungsbolzen 38 zurück gezogen werden. Nach dem Einklappen der Waggonseitenwände 6 werden die Waggonaufsätze 8 mittels der gleisbettfesten Hubeinrichtungen 12 auf den Waggonuntergestellen 7 abgesetzt. Dabei gelangen die Aufsatzbodenwandungen 127 in Eingriff mit den zweiten Kipphebelarmen 121 b und treiben die Kipphebel 121 gegen die Kraft der Druckfedern 129 in eine zur ersten Kipphebeldrehrichtung 131 a entgegengesetzte, zweite Kipphebeldrehrichtung 131 b an. Infolgedessen werden auch die Kopplungsplatten 123 in eine zweite, zur ersten Kopplungsplattendrehrichtung 132a entgegengesetzte Kopplungsplattendrehrichtung 132b angetrieben. Und die Sicherheitsklinken 125 werden dadurch in eine zweite, zur ersten Sicherheitsklinkendrehrichtung 133a entgegengesetzte Sicherheitsklinkendrehrichtung angetrieben. Infolgedessen greifen die Haken der Sicherheitsklinken 125 wieder in die Ösen 126 ein und die Waggonseitenwände 6 sind in ihrer eingeklappten Position verriegelt. Die Druckfedern 129 werden dabei wiederum zunächst komprimiert, solange bis sie erneut in ihrem Totpunkt sind. Anschließend federn die Druckfedern 129 wieder aus und treiben dabei die Kopplungsplatten 123 jeweils in die erste Kopplungsplattendrehrichtung 132a an. Dadurch werden die Kipphebel 121 in die zweite Kipphebeldrehrichtung 131b angetrieben, bis sie an dem Waggonaufsatz 8 anschlagen und sich wieder in der verriegelnden Stellung befinden.

Infolgedessen können nun die Schwenkhebel 76 wieder in ihre unbetätigte Ausgangsstellung zurück geschwenkt werden und die Betätigungshebel 77 gleichzeitig eingefahren werden. Durch das Einfahren der Betätigungshebel 77 werden die Verriegelungsbolzen 38 wieder ausgefahren, wobei sie in die Verriegelungsgehäuse 70 einfahren und die Waggonseitenwände 6 in ihrer eingeklappten Stellung zusätzlich verriegeln.

Vorteil der Güterwaggons 3 ist, dass aufgrund der in Waggonlängsrichtung 17 verschieblichen Verriegelungsbolzen 38, die Waggonseitenwände 6 nicht mehr angehoben werden müssen vor dem Ausklappen. Dadurch sind deutlich niedrigere Kräfte zum Ausklappen der Waggonseitenwände 6 notwendig. Infolgedessen können die leistungsschwächere Antriebsmotoren verwendet werden, was Energie, Platz und Kosten spart.

Besonders vorteilhaft ist zudem der Selbsthemmungsmechanismus. Denn dadurch, dass die Verriegelungsbolzen 38 in ihre selbstgehemmte Stellung durch die Schwerkraft angetrieben sind, werden die Verriegelungsbolzen 38 auch ohne die Federn 63 (z.B. bei einer Montage, oder bei Versagen der Federn 63) in ihrer selbstgehemmten Stellung gehalten. Das heißt die Antriebshebel 41 und die Kulissensteine 42 werden automatisch durch Beaufschlagung mit Schwerkraft in ihre selbsthemmende, also die Verriegelungsbolzen 38 hemmende, Stellung angetrieben. Dabei liegt es selbstverständlich im Rahmen der Erfindung eine andere Gleitführung zwischen dem zweiten Antriebshebelende 41 b und dem jeweiligen Waggonkopfstück 11 vorzusehen. Zudem muss der Antriebshebel 41 nicht vollständig gerade ausgebildet sein. Der Winkel α wäre in diesem Fall der Winkel, den die Waggonlängsrichtung 17 mit der Kraftwirkungsrichtung einschließt, welche durch die beiden Drehachsen des Antriebshebels 41 durch geht. Im Fall des geraden Antriebhebels 41 ist die Kraftwirkungsrichtung parallel zur Antriebshebellängsachse 41 c.

Vorteil der verfahrbaren Schwenk- und Entriegelungseinrichtung 78 ist, zum einen ein minimaler Aufwand am Waggon. Die geringe Anzahl an einfachen und robusten Bauteilen gewährleistet geringe Kosten, Robustheit und ein geringes Gewicht des Güterwaggons 3. Das Warten stationäre Einrichtungen ist zudem besser als bei mobilen, waggonfesten Einrichtungen. Des Weiteren werden weniger stationäre Schwenk- und Entriegelungseinrichtungen benötigt als mobile, da die Stückzahl der Güterumschlagvorrichtungen selbstverständlich geringer ist als die Stückzahl der Güterwaggons.

Die erfindungsgemäße Schwenk- und Entriegelungsvorrichtung 52 gewährleistet auch eine hohe Prozess-Sicherheit. Denn nur die Kombination der Öffnung der Verriegelung mit dem Schwenkhebel verhindert, dass die Bolzen geöffnet werden ohne dass der sichernde Schwenkhebel anliegt.

Aufgrund der verfahrbaren Schwenk- und Entriegelungseinrichtung 78 ist die Einhaltung des Lichtraumprofiles der Güterwaggons problemlos möglich. Denn dadurch werden die Schwenk- und Entriegelungseinrichtungen 78 aus dem Lichtraumprofil heraus bewegt, damit die Güterwaggons ein- bzw,. ausfahren können.

Da die einzelnen Schwenk- und Entriegelungsvorrichtungen 52 unabhängig voneinander angesteuert werden können, ist auch ein Einseitiges Öffnen der Waggons möglich - z.B. bei einem einseitigen Bahnsteig oder der Entladung in einer Halle, bei der das Gleis einseitig durch eine Hallenwand beschränkt ist.

Besonders vorteilhaft ist außerdem die Synchronisierung bzw. mechanische Kopplung der Antriebe der Betätigungshebel 77 und des Schwenkhebels 76. Denn dadurch wird lediglich ein einziger Antriebsmotor 97 für beides benötigt. Es ist allerdings auch möglich, die Antriebe zu entkoppeln und derart zu steuern, dass die vollständige Entriegelung erst dann erfolgt, wenn die hoch geschwenkten Schwenkhebel 76 an den Waggonseitenwänden 6 anliegen. Zudem darf das Ausfahren der Schwenkhebel 76 erst dann erfolgen, wenn die Waggonseitenwände 6 soweit ausgeklappt sind, dass die Verriegelungsbolzen 38 beim Ausfahren nicht mehr in die Verriegelungsgehäuse 70 einfahren. In diesem Fall könnte die zweite Verriegelungseinrichtung 120 entfallen.

Im Rahmen der Erfindung liegt es selbstverständlich auch, dass die Schwenk-und Entriegelungseinrichtung 78 nicht wie dargestellt auf dem Untergrund 113 gleitgelagert, sondern rollengelagert ist.

Des Weiteren liegt es ihm Rahmen der Erfindung, dass jede erste Verriegelungseinrichtung 39 lediglich eine Feder aufweist, die mit beiden Verriegelungsbolzen in Verbindung steht. Zudem liegt es ihm Rahmen der Erfindung, dass jede erste Verriegelungseinrichtung 39 lediglich einen Verriegelungsbolzen 38 aufweist.

Außerdem müssen keine Waggonaufsätze 8 vorhanden sein, auch wenn dies bevorzugt ist. Stattdessen können die zu transportierenden Güter auch direkt auf das Waggonuntergestell 7 aufgesetzt werden. Zudem können anstelle der Drehgestelle 10 auch Einzelachsen vorhanden sein, auch wenn die Drehgestelle 10 bevorzugt sind. Auch ist es möglich, dass die starre Verbindung der Waggonkopfstücke 11 miteinander nicht oder nur teilweise über die Waggonseitenwände 6 erfolgt, auch wenn dies bevorzugt ist. Die starre Verbindung kann zum Beispiel auch durch einen Mittellängsträger erfolgen.

Des Weiteren liegt es im Rahmen der Erfindung, dass nicht alle Elemente der Schwenk- und Entriegelungseinrichtung 78 vom Güterwaggon 3 weg und zu diesem hin gleichzeitig verfahren werden. Z.B. können die Mittel zum Ein- und Ausklappen der Waggonseitenwände 6 und die Mittel zur Betätigung der ersten Verriegelungseinrichtung 39 getrennt verfahrbar sein. Bevorzugt ist aber die gesamte Schwenk- und Entriegelungseinrichtung 78, auf dem Untergrund 113 neben und außerhalb der Gleisanlage 2 in Waggonquerrichtung 18 zu dem Güterwaggon 3 hin und von diesem weg verfahrbar gelagert. Auch muss die Schwenk- und Entriegelungseinrichtung 78 nicht unbedingt parallel zur Waggonquerrichtung 18 verfahrbar sein. Es kommt vielmehr darauf an, dass sie zum Güterwaggon 3 hin und von diesem weg verfahren wird. Dies kann auch schräg in einer anderen horizontalen Richtung erfolgen.

## Patentansprüche

1. Kombinierte Anordnung aufweisend
a) einen Güterwaggon (3) mit einem Waggonuntergestell (7) und vorzugsweise einem darauf angeordneten Waggonaufsatz (8), wobei das Waggonuntergestell (7) einen Waggonrahmen (9) und zwei auf einer Gleisanlage (2) verfahrbar gelagerte Drehgestelle (10) oder Einzelachsen aufweist, wobei der Waggonrahmen (9) zwei Waggonkopfstücke (11) und zwei sich parallel zu einer Waggonlängsrichtung (17) erstreckende Waggonseitenwände (6) aufweist, welche mit den beiden Waggonkopfstücken (11) verbunden sind, wobei die Waggonseitenwände (6) jeweils um eine zur Waggonlängsrichtung (17) parallele Seitenwandschwenkachse (24) nach außen ausklappbar sind, wobei die beiden Waggonseitenwände (6) mit jedem der beiden Waggonkopfstücke (11) mittels einer ersten Verriegelungseinrichtung (39) in ihrer eingeklappten Stellung verriegelbar sind, und
b) pro erste Verriegelungseinrichtung (39) eine dieser zugeordnete Schwenk- und Entriegelungsvorrichtung (52) zur Betätigung der ersten Verriegelungseinrichtung (39) derart, dass die Verriegelung der Waggonseitenwände (6) gelöst wird, und zum Ein- und Ausklappen der Waggonseitenwände (6),
**dadurch gekennzeichnet, dass**
jede Schwenk- und Entriegelungsvorrichtung (52) eine Schwenk- und Entriegelungseinrichtung (78) aufweist, welche Mittel zur Betätigung der ersten Verriegelungseinrichtung (39) derart, dass die Verriegelung der Waggonseitenwände (6) gelöst wird, und Mittel zum Ein- und Ausklappen der Waggonseitenwände (6) aufweist, wobei die Mittel auf einem Untergrund (113) neben und außerhalb der Gleisanlage (2), insbesondere in eine zur Waggonlängsrichtung (17) senkrechte Waggonquerrichtung (18), zu dem Güterwaggon (3) hin und von diesem weg verfahrbar gelagert sind.

2. Anordnung nach Anspruch 1,
**dadurch gekennzeichnet, dass**
die Schwenk- und Entriegelungseinrichtung (78) auf dem Untergrund (113) neben und außerhalb der Gleisanlage (2), insbesondere in Waggonquerrichtung (18), zu dem Güterwaggon (3) hin und von diesem weg verfahrbar gelagert ist,
wobei vorzugsweise jede Schwenk- und Entriegelungsvorrichtung (52) einen Antriebsmotor (117) aufweist, mit dem die Schwenk- und Entriegelungseinrichtung (78) in Waggonquerrichtung (18) oszillierend antreibbar in Verbindung steht.

3. Anordnung nach Anspruch 1 oder 2,
**dadurch gekennzeichnet, dass**
a) jede erste Verriegelungseinrichtung (39) zumindest einen, vorzugsweise zwei, Verriegelungsbolzen (38) aufweist, wobei die Verriegelungsbolzen (38) in einer verriegelnden Stellung mit einem seitenwandfesten Verriegelungselement (44) die Waggonseitenwand (6) verriegelnd zusammenwirken und in einer nicht verriegelnden Stellung außer Eingriff mit dem Verriegelungselement (44) sind und auf den Waggonkopfstücken (11) parallel zur Waggonlängsrichtung (17) von ihrer verriegelnden Stellung in ihre nicht verriegelnde Stellung und umgekehrt hin- und her verschieblich gelagert sind, wobei
b) jede erste Verriegelungseinrichtung (39) einen Selbsthemmungsmechanismus mit Mitteln (41;42;44), mittels denen der jeweilige Verriegelungsbolzen (38) in seiner verriegelnden Stellung durch Selbsthemmung haltbar ist, aufweist, wobei
c) die Verriegelungsbolzen (38) jeweils durch Schwerkraft in ihre verriegelnde, selbstgehemmte Stellung antreibbar sind.

4. Anordnung nach Anspruch 3,
**dadurch gekennzeichnet, dass**
jeder Selbsthemmungsmechanismus einen Antriebshebel (41) aufweist, der einendig an einem ersten Antriebshebelende (41a) mit dem jeweiligen Verriegelungsbolzen (38) um eine zur Waggonquerrichtung (18) parallele Drehachse drehbar in Verbindung steht und der andernendig an einem zweiten Antriebshebelende (41 b) um eine zur Waggonquerrichtung (18) parallele Drehachse drehbar und in Waggonhöhenrichtung (43) über eine Gleitführung verschieblich mit dem Waggonkopfstück (11) in Verbindung steht, wobei der Antriebshebel (41) von einer selbsthemmenden Stellung in eine nicht selbsthemmende Stellung und umgekehrt bewegbar ist, wobei das zweite Antriebhebelende (41 b) in der selbsthemmenden Stellung tiefer als in der nicht selbsthemmenden Stellung angeordnet ist,
wobei vorzugsweise jeder Antriebhebel (41) eine Kraftwirkungsrichtung aufweist, die mit der Waggonlängsrichtung (17) einen Neigungswinkel α einschließt, wobei der Neigungswinkel α in der selbsthemmenden Stellung des Antriebhebels (41) kleiner als der Haftreibwinkel ϕ₀ ist.

5. Anordnung nach Anspruch 4,
**dadurch gekennzeichnet, dass**
jeder Antriebhebel (41) an seinem zweiten Antriebshebelende (41 b) mit einem Kulissenstein (42) um eine zur Waggonquerrichtung (18) parallele Drehachse drehbar in Verbindung steht, wobei der Kulissenstein (42) in Waggonhöhenrichtung (43) über eine Gleitführung verschieblich mit dem Waggonkopfstück (11) in Verbindung steht.

6. Anordnung nach einem der Ansprüche 3 bis 5,
**dadurch gekennzeichnet, dass**
die Verriegelungsbolzen (38) mit mindestens einer Feder (63), insbesondere jeweils über einen Hebelmechanismus (66), in ihre verriegelnde Stellung, bevorzugt in eine zur Waggonlängsrichtung (17) parallele Bolzenverriegelungsrichtung (69a), antreibbar in Verbindung stehen.

7. Anordnung nach einem der Ansprüche 3 bis 6,
**dadurch gekennzeichnet, dass**
die Schwerpunkte der Waggonseitenwände (6) jeweils nicht vertikal fluchtend zu den Seitenwandschwenkachsen (24) angeordnet sind, sondern relativ zu diesen nach außen versetzt sind.

8. Anordnung nach einem der vorhergehenden Ansprüche 3 bis 7,
**dadurch gekennzeichnet, dass**
jeder Hebelmechanismus (66) zwei Lastaufnahmehebel (49) aufweist, die sich jeweils parallel zur Waggonlängsrichtung (17) erstrecken und in Waggonlängsrichtung (17) und Waggonquerrichtung (18) verschieblich und ansonsten unverschieblich und unverdrehbar mit dem jeweiligen Waggonkopfstück (11) in Verbindung stehen, wobei die Verriegelungsbolzen (38) mit jeweils einem der beiden Lastaufnahmehebel (49) in ihre nicht verriegelnde Stellung, bevorzugt in eine zur Bolzenverriegelungsrichtung (69a) entgegengesetzte Bolzenentriegelungsrichtung (69b), antreibbar in Verbindung stehen,
wobei vorzugsweise die beiden Lastaufnahmehebel (49) mit der Feder (63) oder jeweils mit einer den Federn (63) in eine nicht betätigte Stellung der Lastaufnahmehebel (49) antreibbar in Verbindung stehen, wobei in der nicht betätigten Stellung der Lastaufnahmehebel (49) die Verriegelungsbolzen (38) in ihrer verriegelnden Stellung sind.

9. Anordnung nach Anspruch 8,
**dadurch gekennzeichnet, dass**
in einer betätigten Stellung der Lastaufnahmehebel (49) die Verriegelungsbolzen (38) in ihrer nicht verriegelnden Stellung sind.

10. Anordnung nach einem der Ansprüche 3 bis 9,
**dadurch gekennzeichnet, dass**
jede Verriegelungseinrichtung (39) symmetrisch zu einer Symmetrieebene (37) ausgebildet ist, wobei die Symmetrieebene (37) senkrecht zur Waggonlängsrichtung (17) ist.

11. Anordnung nach einem der Ansprüche 3 bis 10,
**dadurch gekennzeichnet, dass**
jede Schwenk- und Entriegelungseinrichtung (78) einen Schwenkhebel (76) zum Verschwenken der jeweiligen Waggonseitenwand (6), zwei in Waggonlängsrichtung (17) ein- und ausfahrbare Betätigungshebel (77) zur Betätigung der Lastaufnahmehebel (49) und ein Gehäuse (75) zur Lagerung des Schwenkhebels (76) und der Betätigungshebel (77) aufweist.

12. Anordnung nach Anspruch 11,
**dadurch gekennzeichnet, dass**
der Schwenkhebel (76) um eine zur Waggonlängsrichtung (17) parallele Schwenkhebeldrehachse (83) hin- und her schwenkbar mit dem Gehäuse (75) verbunden ist,
wobei vorzugsweise in einer zum Güterwaggon (3) hin gefahrenen Stellung der jeweiligen Schwenk- und Entriegelungseinrichtung (78) die Schwenkhebeldrehachse (83) koaxial zur Seitenwandschwenkachse (24) der mit der Schwenk- und Entriegelungseinrichtung (78) verschwenkbaren Waggonseitenwand (6) ist.

13. Anordnung nach Anspruch 11 oder 12,
**dadurch gekennzeichnet, dass**
der Schwenkhebel (76) ein Lagerende (76a) zur Lagerung des Schwenkhebels (76) und ein Betätigungsende (76b) zur Betätigung und Aufnahme der jeweiligen Waggonseitenwand (6) aufweist,
wobei vorzugsweise der Schwenkhebel (76) einen L-förmigen Querschnittsverlauf mit einem ersten L-Schenkel (79a) und einem zweiten L-Schenkel (79b) aufweist, wobei der erste L-Schenkel (79a) des Schwenkhebels (76) einendig das Betätigungsende (76b), insbesondere mit einer abgerundeten, verbreiterten Betätigungsnase (74), aufweist und sich andernendig an den ersten L-Schenkel (79a) der zweite L-Schenkel (79b) anschließt, wobei der zweite L-Schenkel (79b) an einem freien, dem ersten L-Schenkel (79a) abgewandten Ende das Lagerende (76a) des Schwenkhebels (76) aufweist.

14. Anordnung nach Anspruch 12 oder 13,
**dadurch gekennzeichnet, dass**
jede Schwenk- und Entriegelungseinrichtung (78) einen Antriebsmotor (97) aufweist, mit dem der Schwenkhebel (76) um die Schwenkhebeldrehachse (83) hin- und her schwenkbar, insbesondere von einer unteren Stellung in eine hoch geschwenkte Stellung und umgekehrt, antreibbar in Verbindung steht,
wobei vorzugsweise in der unteren Stellung des Schwenkhebels (76) der erste L-Schenkel (79a) parallel zur Waggonquerrichtung (18) ausgerichtet ist und in der hoch geschwenkten Stellung der erste L-Schenkel (79a) aufgestellt ist, also insbesondere parallel zu einer Waggonhöhenrichtung (43) ausgerichtet ist.

15. Anordnung nach einem der Ansprüche 11 bis 14,
**dadurch gekennzeichnet, dass**
die Betätigungshebel (77) jeweils ein freies Betätigungsende (89) zur Betätigung eines der beiden Lastaufnahmehebel (49) sowie ein diesem gegenüberliegendes Lagerende (90) zur Lagerung am Gehäuse (75) aufweisen,
wobei vorzugsweise die Betätigungshebel (77) derart am Gehäuse (75) gelagert sind, dass die beiden Betätigungsenden (89) entgegengesetzt zueinander in Waggonlängsrichtung (17) relativ zum Gehäuse (75) hin-und her verschieblich sind.

16. Anordnung nach Anspruch 15,
**dadurch gekennzeichnet, dass**
in einer nicht betätigten, eingefahrenen Stellung der Betätigungshebel (77) die Betätigungshebel (77) am Gehäuse (75) anliegen, insbesondere im wesentlichen vertikal ausgerichtet sind, und in einer betätigten, ausgefahrenen Stellung der Betätigungshebel (77) die Betätigungshebel (77) vom Gehäuse (75) weggestreckt sind und die Betätigungsenden (89) der beiden Betätigungshebel (77) weiter voneinander entfernt sind als in der eingefahrenen Stellung.

17. Anordnung nach einem der Ansprüche 14 bis 16,
**dadurch gekennzeichnet, dass**
die Betätigungshebel (77) mit dem Antriebsmotor (97) ein- und ausfahrbar antreibbar in Verbindung stehen,
wobei vorzugsweise die Antriebe des Schwenkhebels (76) und der Betätigungshebel (77) miteinander synchronisiert sind, insbesondere miteinander mechanisch gekoppelt sind.

18. Anordnung nach einem der Ansprüche 1 bis 17,
**dadurch gekennzeichnet, dass**
der Schienenwaggon (3) zumindest eine zweite Verriegelungsvorrichtungen (120) zur Verrieglung der Waggonseitenwände (6) mit den Waggonkopfstücken (11) in ihrer eingeklappten Stellung aufweist, wobei die zweite Verriegelungsvorrichtung (120) durch Abheben des Waggonaufsatzes (8) von dem Waggonuntergestell (7) entriegelbar ist und durch Aufsetzen des Waggonaufsatzes (8) auf das Waggonuntergestell (7) verriegelbar ist.

19. Güterumschlagvorrichtung (1) zum Umschlagen von Gütern von der Straße zur Schiene und umgekehrt mittels horizontaler Querverladung mittels von jeweils einem Waggonuntergestell (7) eines Güterwaggons (3) abnehmbaren, Güter aufnehmenden Waggonaufsätzen (8), aufweisend:
a) ein Gleis (2) mit zwei Gleissträngen (2a;2b),
b) eine neben dem Gleis (2) und parallel zu dieser angeordnete Verladebahn (4),
c) Hubeinrichtungen (12) zum Anheben und Absenken der Waggonaufsätze (8) von bzw. auf dem jeweiligen Waggonuntergestell (7),
d) Quertransporteinrichtungen für den Quertransport der Waggonaufsätze (8) von den Güterwaggons (3) auf die Verladebahn (4) und umgekehrt mit jeweils zumindest einem verfahrbaren Quertransportmittel (5),
**dadurch gekennzeichnet, dass**
die Güterumschlagvorrichtung (1) zumindest eine Anordnung, vorzugsweise mehrere Anordnungen, gemäß einem der Ansprüche 1 bis 18 aufweist.

## Claims

1. A combined arrangement having
a) a goods wagon (3) with a wagon underframe (7) and preferably a wagon superstructure (8) arranged thereon, wherein the wagon underframe (7) has a wagon frame (9) and two bogies (10) or individual axles, which bogies or axles are movably mounted on a track system (2), wherein the wagon frame (9) has two wagon end pieces (11) and two wagon lateral walls (6), extending parallel to a wagon longitudinal direction (17), which are connected to the two wagon end pieces (11), wherein the wagon lateral walls (6) can in each case be folded down outwards about a lateral wall pivot axis (24) parallel to the wagon longitudinal direction (17), wherein the two wagon lateral walls (6) are lockable with each of the two wagon end pieces (11) by means of a first locking arrangement (39) in their folded up state, and
b) one pivot and unlocking device (52) per first locking arrangement (39), associated with the latter, for actuation of the first locking arrangement (39) in such a manner that the locking of the wagon lateral walls (6) is released and for folding down and up of the wagon lateral walls (6),
**characterized in that**
each pivot and unlocking device (52) has a pivot and unlocking arrangement (78) having means for actuation of the first locking arrangement (39) in such a manner that the locking of the wagon lateral walls (6) is released and means for folding up and down of the wagon lateral walls (6), wherein the means are mounted alongside and exterior to the track system (2) on ground (113) in a manner movable toward and away from the goods wagon (3), in particular in a wagon transverse direction (18) perpendicular to the wagon longitudinal direction (17).

2. An arrangement according to claim 1,
**characterized in that**
the pivot and unlocking arrangement (78) is mounted alongside and exterior to the track system (2) on the ground (113) in a manner movable toward and away from the goods wagon (3), in particular in a wagon transverse direction (18),
wherein preferably each pivot and unlocking device (52) has a drive motor (117) to which the pivot and unlocking arrangement (78) is connected so as to be drivable in an oscillating manner in the wagon transverse direction (18).

3. An arrangement according to claim 1 or 2,
**characterized in that**
a) each first locking arrangement (39) has at least one, preferably two, locking bolts (38), wherein in a locking position the locking bolts (38) cooperate, in a manner so as to lock the wagon lateral wall (6), with a locking element (44) fixed to the lateral wall and in a non-locking position are disengaged from the locking element (44) and the locking bolts (38) are mounted on the wagon end pieces (11) so as to be displaceable to and fro parallel to the wagon longitudinal direction (17) from their locking position into their non-locking position and vice versa, wherein
b) each first locking arrangement (39) has a self-retaining mechanism with means (41; 42; 44) by means of which the respective locking bolt (38) can be held in its locking position by means of self-retention, wherein
c) the locking bolts (38) are each drivable by gravity into their locking, self-retained position.

4. An arrangement according to claim 3,
**characterized in that**
each self-retaining mechanism has a driving lever (41), which at one end at a first driving lever end (41a) is rotatably connected to the respective locking bolt (38) about a rotational axis parallel to the wagon transverse direction (18) and at the other end at a second driving lever end (41b) is rotatably connected to the wagon end piece (11) about a rotational axis parallel to the wagon transverse direction (18) and is displaceably connected to the wagon end piece (11) in the wagon vertical direction (43) via a slide guide, wherein the driving lever (41) is movable from a self-retaining position into a non self-retaining position and vice versa, wherein the second driving lever end (41b) is arranged lower in the self-retaining position than in the non self-retaining position, wherein preferably each driving lever (41) has a force action direction which encloses an angle of inclination α with the wagon longitudinal direction (17), wherein the angle of inclination α is smaller in the self-retaining position of the driving lever (41) than the angle of static friction Φ₀.

5. An arrangement according to claim 4,
**characterized in that**
each driving lever (41) is at its second driving lever end (41b) rotatably connected to a slide block (42) about a rotational axis parallel to the wagon transverse direction (18), wherein the slide block (42) is displaceably connected to the wagon end piece (11) in the wagon vertical direction (43) via a slide guide.

6. An arrangement according to any one of claims 3 to 5,
**characterized in that** the locking bolts (38) are connected to at least one spring (63), in particular in each case via a lever mechanism (66), so as to be drivable into their locking position, preferably in a bolt locking direction (69a) parallel to the wagon longitudinal direction (17).

7. An arrangement according to any one of claims 3 to 6,
**characterized in that**
the centers of gravity of the wagon lateral walls (6) are not in each case arranged vertically aligned with the lateral wall pivot axes (24), rather are outwardly offset relative thereto.

8. An arrangement according to any one of the preceding claims 3 to 7,
**characterized in that**
each lever mechanism (66) has two load receiving levers (49) which in each case extend parallel to the wagon longitudinal direction (17) and are connected to the respective wagon end piece (11) in a displaceable manner in the wagon longitudinal direction (17) and in the wagon transverse direction (18) and otherwise in a non-displaceable and non-rotatable manner, wherein the locking bolts (38) are in each case connected to one of the two load receiving levers (49) so as to be drivable into their non-locking position, preferably in a bolt unlocking direction (69b) opposite to the bolt locking direction (69a), wherein preferably the two load receiving levers (49) are connected to the spring (63) or in each case to one of the springs (63) so as to be drivable into a non-actuated position of the load receiving levers (49), wherein the locking bolts (38) are in their locking position in the non-actuated position of the load receiving levers (49).

9. An arrangement according to claim 8,
**characterized in that**
the locking bolts (38) are in their non-locking position in an actuated position of the load-receiving levers (49).

10. An arrangement according to any one of claims 3 to 9,
**characterized in that**
each locking arrangement (39) is symmetrical to a plane of symmetry (37), wherein the plane of symmetry (37) is perpendicular to the wagon longitudinal direction (17).

11. An arrangement according to any one of claims 3 to 10,
**characterized in that**
each pivot and unlocking arrangement (78) has a pivot lever (76) for pivoting of the respective wagon lateral wall (6), two actuating levers (77), retractable and extendible in the wagon longitudinal direction (17), for actuating the load receiving levers (49) and a housing (75) for mounting the pivot lever (76) and the actuating levers (77).

12. An arrangement according to claim 11,
**characterized in that**
the pivot lever (76) is connected to the housing (75) in a manner pivotable to and fro about a pivot lever rotational axis (83) parallel to the wagon longitudinal direction (17), wherein preferably in a position of the respective pivot and unlocking arrangement (78) moved toward the goods wagon (3), the pivot lever rotational axis (83) is coaxial with the lateral wall pivot axis (24) of the wagon lateral wall (6) pivotable with the pivot and unlocking arrangement (78).

13. An arrangement according to claim 11 or 12,
**characterized in that**
the pivot lever (76) has a support end (76a) for mounting of the pivot lever (76) and an actuating end (76b) for actuating and receiving the respective wagon lateral wall (6), wherein preferably the pivot lever (76) has an L-shaped cross-sectional course with a first L-leg (79a) and a second L-leg (79b), wherein the first L-leg (79a) of the pivot lever (76) has at one end the actuating end (76b), in particular with a rounded, widened actuating nose (74), and at the other end the second L-leg (79b) adjoins the first L-leg (79a), wherein the second L-leg (79b) has the support end (76a) of the pivot lever (76) at a free end remote from the first L-leg (79a).

14. An arrangement according to claim 12 or 13,
**characterized in that**
each pivot and unlocking arrangement (78) has a drive motor (97) with which the pivot lever (76) is driveably connected so as to be pivotable to and fro about the pivot lever rotational axis (83), in particular from a lower position into a pivoted-up position and vice versa,
wherein preferably the first L-leg (79a) is oriented parallel to the wagon transverse direction (18) in the lower position of the pivot lever (76) and the first L-leg (79a) is upright in the pivoted-up position, therefore in particular oriented parallel to a wagon vertical direction (43).

15. An arrangement according to any one of claims 11 to 14,
**characterized in that**
the actuating levers (77) in each case have a free actuating end (89) for actuation of one of the two load receiving levers (49) and a support end (90), opposite thereto, for mounting on the housing (75),
wherein preferably the actuating levers (77) are mounted on the housing (75) in such a manner that the two actuating ends (89) are in the wagon longitudinal direction (17) displaceable to and fro relative to the housing (75) in an opposite direction to one another.

16. An arrangement according to claim 15,
**characterized in that**
in a non-actuated, retracted position of the actuating levers (77), the actuating levers (77) contact the housing (75), in particular are oriented substantially vertically, and in an actuated, extended position of the actuating levers (77), the actuating levers (77) are extended away from the housing (75) and the actuating ends (89) of the two actuating levers (77) are more distant from one another than in the retracted position.

17. An arrangement according to any one of claims 14 to 16,
**characterized in that**
the actuating levers (77) are driveably connected to the drive motor (97) so as to be retractable and extendable,
wherein the drives of the pivot lever (76) and the actuating levers (77) are preferably synchronized with one another, in particular are mechanically coupled to one another.

18. An arrangement according to any one of claims 1 to 17,
**characterized in that**
the rail wagon (3) has at least one second locking device (120) for locking the wagon lateral walls (6) to the wagon end pieces (11) in their folded-up position, wherein the second locking device (120) is unlockable through lifting off of the wagon superstructure (8) from the wagon underframe (7) and is lockable through placement of the wagon superstructure (8) on the wagon underframe (7).

19. A freight transfer device (1) for transferring goods from road to rail and vice versa by means of horizontal transverse loading by means of goods-receiving wagon superstructures (8) removable in each case from a wagon underframe (7) of a goods wagon (3), having:
a) a rail line (2) with two tracks (2a; 2b),
b) a loading path (4) arranged alongside the rail line (2) and parallel thereto,
c) lifting devices (12) for raising and lowering the wagon superstructures (8) from or on the respective wagon underframe (7),
d) transverse transporting arrangements for the transverse transportation of the wagon superstructures (8) from the goods wagons (3) onto the loading path (4) and vice versa with in each case at least one movable transverse transporting means (5),
**characterized in that**
the freight transfer device (1) has at least one arrangement, preferably a plurality of arrangements, according to any one of claims 1 to 18.

## Revendications

1. Agencement combiné présentant
a) un wagon de marchandises (3) avec un châssis de wagon (7) et de préférence une superstructure de wagon (8) agencée dessus, le châssis de wagon (7) présentant un cadre de wagon (9) et deux boggies (10) logés de manière mobile sur une voie ferrée (2) ou des essieux individuels, le cadre de wagon (9) présentant deux têtes de wagon (11) et deux parois latérales de wagon (6) s'étendant parallèlement à un sens longitudinal du wagon (17), lesquelles sont reliées aux deux têtes de wagon (11), les parois latérales de wagon (6) étant pivotantes vers l'extérieur respectivement autour d'un axe de pivotement de paroi latérale (24) parallèle au sens longitudinal du wagon (17), les deux parois latérales de wagon (6) pouvant être verrouillées avec chacune des deux têtes de wagon (11) à l'aide d'un premier système de verrouillage (39) dans leur position repliée, et
b) par premier système de verrouillage (39), un dispositif de pivotement et de déverrouillage associé à celui-ci (52) pour l'actionnement du premier système de verrouillage (39) de telle manière que le verrouillage des parois latérales de wagon (6) soit détaché et pour le repliage et le pivotement des parois latérales de wagon (6),
**caractérisé en ce que**
chaque dispositif de pivotement et de déverrouillage (52) présente un système de pivotement et de déverrouillage (78) qui présente des moyens d'actionnement du premier système de verrouillage (39) de telle manière que le verrouillage des parois latérales de wagon (6) soit détaché, et des moyens pour le repliage et le pivotement des parois latérales de wagon (6), les moyens étant logés de manière déplaçable vers le wagon de marchandises (3) et loin de celui-ci sur un fond (113) à côté et en dehors de la voie ferrée (2), en particulier dans un sens transversal du wagon (18) perpendiculaire au sens longitudinal du wagon (17).

2. Agencement selon la revendication 1,
**caractérisé en ce que**
le système de pivotement et de déverrouillage (78) est logé de manière déplaçable vers le wagon de marchandises (3) et loin de celui-ci sur le fond (113) à côté et en dehors de la voie ferrée (2), en particulier dans le sens transversal du wagon (18),
dans lequel chaque dispositif de pivotement et de déverrouillage (52) présente de préférence un moteur d'entraînement (117), avec lequel le système de pivotement et de déverrouillage (78) se trouve en liaison de manière entraînable en oscillation dans le sens transversal du wagon (18).

3. Agencement selon la revendication 1 ou 2,
**caractérisé en ce que**
a) chaque premier système de verrouillage (39) présente au moins un, de préférence deux boulons de verrouillage (38), les boulons de verrouillage (38) coopérant en verrouillant la paroi latérale de wagon (6) dans une position de verrouillage avec un élément de verrouillage (44) fixé à la paroi latérale et étant dans une position de non-verrouillage en désengagement de l'élément de verrouillage (44) et étant logés de manière coulissante alternativement sur les têtes de wagon (11) parallèlement au sens longitudinal du wagon (17) de leur position de verrouillage à leur position de non-verrouillage et inversement, dans lequel
b) chaque premier système de verrouillage (39) présente un mécanisme d'autoblocage avec des moyens (41 ; 42 ; 44), à l'aide desquels le boulon de verrouillage respectif (38) peut être maintenu dans sa position de verrouillage par autoblocage, dans lequel
c) les boulons de verrouillage (38) pouvent être entraînés respectivement par la force de gravité dans leur position de verrouillage autobloquée.

4. Agencement selon la revendication 3,
**caractérisé en ce que**
chaque mécanisme d'autoblocage présente un levier d'entraînement (41) qui est en liaison de manière rotative à une extrémité sur une première extrémité de levier d'entraînement (41a) avec le boulon de verrouillage (38) respectif autour d'un axe de rotation parallèle au sens transversal du wagon (18) et qui est en liaison à une autre extrémité sur une seconde extrémité de levier d'entraînement (41b) de manière rotative autour d'un axe de rotation parallèle au sens transversal du wagon (18) et de manière coulissante dans le sens vertical du wagon (43) par un guidage glissant avec la tête de wagon (11), le levier d'entraînement (41) étant mobile d'une position d'autoblocage à une position de non autoblocage et inversement, la seconde extrémité de levier d'entraînement (41b) étant agencée dans la position d'autoblocage plus bas que dans la position de non autoblocage,
dans lequel chaque levier d'entraînement (41) présente de préférence un sens d'action de force qui forme, avec le sens longitudinal du wagon (17), un angle d'inclinaison α, l'angle d'inclinaison α étant dans la position d'autoblocage du levier d'entraînement (41) plus petit que l'angle de frottement par adhérence ϕ₀.

5. Agencement selon la revendication 4,
**caractérisé en ce que**
chaque levier d'entraînement (41) est en liaison de manière rotative au niveau de sa seconde extrémité de levier d'entraînement (41b) avec un coulisseau (42) autour d'un axe de rotation parallèle au sens transversal du wagon (18), le coulisseau (42) étant en liaison dans le sens vertical du wagon (43) de manière coulissante par un guidage glissant avec la tête de wagon (11).

6. Agencement selon l'une quelconque des revendications 3 à 5, **caractérisé en ce que**
les boulons de verrouillage (38) sont en liaison de manière entraînable avec au moins un ressort (63), en particulier respectivement par un mécanisme de levier (66), dans leur position de verrouillage, de préférence dans un sens de verrouillage de boulon (69a) parallèle au sens longitudinal du wagon (17).

7. Agencement selon l'une quelconque des revendications 3 à 6,
**caractérisé en ce que**
les centres de gravité des parois latérales de wagon (6) sont agencés respectivement de manière à ne pas s'aligner verticalement sur les axes de pivotement de paroi latérale (24) mais sont en déport relatif par rapport à ceux-ci vers l'extérieur.

8. Agencement selon l'une quelconque des revendications 3 à 7,
**caractérisé en ce que**
chaque mécanisme de levier (66) présente deux leviers de réception de charge (49) qui s'étendent respectivement parallèlement au sens longitudinal du wagon (17) et qui sont en liaison de manière coulissante dans le sens longitudinal du wagon (17) et le sens transversal du wagon (18) et sinon de manière non coulissante et non rotative avec la tête de wagon respective (11), les boulons de verrouillage (38) étant en liaison de manière entraînable avec respectivement l'un des deux leviers de réception de charge (49) dans leur position de non-verrouillage, de préférence dans un sens de déverrouillage de boulon (69b) opposé au sens de verrouillage de boulon (69a),
dans lequel les deux leviers de réception de charge (49) sont de préférence en liaison de manière entraînable avec le ressort (63) ou respectivement avec un des ressorts (63) dans une position non actionnée des leviers de réception de charge (49), les boulons de verrouillage (38) étant dans leur position de verrouillage dans la position non actionnée des leviers de réception de charge (49).

9. Agencement selon la revendication 8,
**caractérisé en ce que**
les boulons de verrouillage (38) sont dans leur position de non-verrouillage dans une position actionnée des leviers de réception de charge (49).

10. Agencement selon l'une quelconque des revendications 3 à 9,
**caractérisé en ce que**
chaque système de verrouillage (39) est réalisé de manière symétrique à un plan de symétrie (37), le plan de symétrie (37) étant perpendiculaire au sens longitudinal du wagon (17).

11. Agencement selon l'une quelconque des revendications 3 à 10,
**caractérisé en ce que**
chaque système de pivotement et de déverrouillage (78) présente un levier de pivotement (76) pour le pivotement de la paroi latérale de wagon respective (6), deux leviers d'actionnement (77) rentrables et sortables dans le sens longitudinal du wagon (17) pour l'actionnement des leviers de réception de charge (49) et un boîtier (75) pour le logement du levier de pivotement (76) et des leviers d'actionnement (77).

12. Agencement selon la revendication 11,
**caractérisé en ce que**
le levier de pivotement (76) est relié de manière pivotante alternativement au boîtier (75) autour d'un axe de rotation de levier de pivotement (83) parallèle au sens longitudinal du wagon (17),
dans lequel l'axe de rotation de levier de pivotement (83) est coaxial de préférence à l'axe de pivotement de paroi latérale (24) de la paroi latérale de wagon (6) pouvant pivoter avec le système de pivotement et de déverrouillage (78) dans une position déplacée vers le wagon de marchandises (3) du système de pivotement et de déverrouillage (78) respectif.

13. Agencement selon la revendication 11 ou 12,
**caractérisé en ce que**
le levier de pivotement (76) présente une extrémité de palier (76a) pour le logement du levier de pivotement (76) et une extrémité d'actionnement (76b) pour l'actionnement et la réception de la paroi latérale de wagon respective (6),
dans lequel le levier de pivotement (76) présente de préférence une allure de section en L avec une première branche en L (79a) et une seconde branche en L (79b), la première branche en L (79a) du levier de pivotement (76) présentant à une extrémité l'extrémité d'actionnement (76b) en particulier avec un nez d'actionnement (74) élargi arrondi et la seconde branche en L (79b) se raccordant à l'autre extrémité à la première branche en L (79a), la seconde branche en L (79b) présentant l'extrémité de palier (76a) du levier de pivotement (76) à une extrémité libre, éloignée de la première branche en L (79a).

14. Agencement selon la revendication 12 ou 13,
**caractérisé en ce que**
chaque système de pivotement et de déverrouillage (78) présente un moteur d'entraînement (97), avec lequel le levier de pivotement (76) est en liaison par entraînement de manière pivotante alternativement autour de l'axe de rotation de levier de pivotement (83), en particulier d'une position inférieure à une position pivotée en haut et inversement,
dans lequel la première branche en L (79a) est de préférence orientée dans la position inférieure du levier de pivotement (76) parallèlement au sens transversal du wagon (18) et la première branche en L (79a) étant installée dans la position pivotée en haut, étant donc orientée en particulier parallèlement à un sens vertical du wagon (43).

15. Agencement selon l'une quelconque des revendications 11 à 14,
**caractérisé en ce que**
les leviers d'actionnement (77) présentent respectivement une extrémité d'actionnable libre (89) pour l'actionnement d'un des deux leviers de réception de charge (49) ainsi qu'une extrémité de palier (90) opposée à celui-ci pour le logement sur le boîtier (75),
dans lequel les leviers d'actionnement (77) sont de préférence logés sur le boîtier (75) de telle manière que les deux extrémités d'actionnement (89) soient coulissantes alternativement en regard l'une de l'autre dans le sens longitudinal du wagon (17) par rapport au boîtier (75).

16. Agencement selon la revendication 15,
**caractérisé en ce que**
dans une position rentrée non actionnée des leviers d'actionnement (77), les leviers d'actionnement (77) reposent contre le boîtier (75), en particulier sont orientés sensiblement verticalement, et dans une position actionnée sortie des leviers d'actionnement (77), les leviers d'actionnement (77) sont étirés loin du boîtier (75) et les extrémités d'actionnement (89) des deux leviers d'actionnement (77) sont davantage éloignées l'une de l'autre que dans la position rentrée.

17. Agencement selon l'une quelconque des revendications 14 à 16,
**caractérisé en ce que**
les leviers d'actionnement (77) sont en liaison par entraînement de manière rentrable et sortable avec le moteur d'entraînement (97),
dans lequel les entraînements du levier de pivotement (76) et des leviers d'actionnement (77) sont synchronisés de préférence ensemble, en particulier sont couplés mécaniquement entre eux.

18. Agencement selon l'une quelconque des revendications 1 à 17,
**caractérisé en ce que**
le wagon sur rail (3) présente au moins un second dispositif de verrouillage (120) pour le verrouillage des parois latérales de wagon (6) avec les têtes de wagon (11) dans sa position repliée, le second dispositif de verrouillage (120) pouvant être déverrouillé par le levage de la superstructure de wagon (8) du châssis de wagon (7) et pouvant être verrouillé par placement de la superstructure de wagon (8) sur le châssis de wagon (7).

19. Dispositif de transbordement de marchandises (1) pour le transbordement de marchandises de la route au rail et inversement au moyen d'un élément de chargement transversal horizontal à l'aide de superstructures de wagon (8) recevant des marchandises, retirables respectivement d'un châssis de wagon (7) d'un wagon de marchandises (3), présentant :
a) une voie (2) avec deux tronçons de voie (2a ; 2b),
b) une bande de chargement (4) agencée à côté de la voie (2) et parallèlement à celle-ci,
c) des dispositifs de levage (12) pour le levage et l'abaissement des superstructures de wagon (8) de ou sur le châssis de wagon (7) respectif,
d) des systèmes de transport transversal pour le transport transversal des superstructures de wagon (8) des wagons de marchandises (3) à la bande de chargement (4) et inversement avec respectivement au moins un moyen de transport transversal mobile (5),
**caractérisé en ce que**
le dispositif de transbordement de marchandises (1) présente au moins un agencement, de préférence plusieurs agencements selon l'une quelconque des revendications 1 à 18.
